# EUROPÄISCHE PATENTSCHRIFT

(11) **EP 2 266 184 B1**
(45) Veröffentlichungstag und Bekanntmachung des Hinweises auf die Patenterteilung: **13.11.2019**
(21) Anmeldenummer: 09723364.7
(22) Anmeldetag: 17.03.2009
(51) Int. Cl.: H02M 3/156

(54) **VORRICHTUNG UND VERFAHREN ZUM WANDELN EINES POTENTIALS**
DEVICE AND METHOD FOR CONVERTING A POTENTIAL
DISPOSITIF ET PROCEDE DE CONVERSION D'UN POTENTIEL

(30) Priorität: 17.03.2008 DE 102008014622; 02.05.2008 DE 102008021875
(43) Veröffentlichungstag der Anmeldung: 29.12.2010
(73) Patentinhaber: Fraunhofer-Gesellschaft zur Förderung der angewandten Forschung e.V., 80686 München (DE)
(72) Erfinder: FÖRSTER, Frank, 91052 Erlangen (DE); SPIES, Peter, 91074 Herzogenaurach (DE)
(74) Vertreter: Hersina, Günter
(86) Internationale Anmeldenummer: PCT/EP2009/001962
(87) Internationale Veröffentlichungsnummer: WO 2009/115298

(56) Entgegenhaltungen:
- EP-A- 0 706 253
- EP-A- 1 403 143
- DE-A1- 19 754 964
- DE-A1- 19 754 964
- JP-A- 2005 328 662
- US-A1- 2004 078 662
- GAO L ET AL: "Active power sharing in hybrid battery/capacitor power sources" APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, Bd. 1, 9. Februar 2003 (2003-02-09), Seiten 497-503, XP010631555 ISBN: 978-0-7803-7768-4
- CEGNAR E J ET AL: "A purely ultracapacitor energy storage system for hybrid electric vehicles utilizing a microcontroller-based DC-DC boost converter" APPLIED POWER ELECTRONICS CONFERENCE AND EXPOSITION, 2004. APEC '04. N INETEENTH ANNUAL IEEE ANAHEIM, CA, USA 22-26 FEB. 2004, PISCATAWAY, NJ, USA,IEEE, Bd. 2, 22. Februar 2004 (2004-02-22), Seiten 1160-1164, XP010703616 ISBN: 978-0-7803-8269-5

## Beschreibung

Die vorliegende Erfindung bezieht sich auf eine Potentialwandlervorrichtung und ein Verfahren zur Potentialwandlung, wie es beispielsweise bei Schaltreglern oder Spannungsreglern vorkommt. Insbesondere kann die Potentialwandlervorrichtung und das Verfahren zum Potentialwandeln bei Powermanagementanwendungen für Quellen mit geringer kontinuierlicher Leistungsabgabe, wie z.B. bei Thermogeneratoren oder Piezowandlern, die eine geringe Leistungsabgabe von beispielsweise 0.5 Watt aufweisen können, eingesetzt werden.

Das technische Einsatzgebiet der hier beschriebenen Erfindung ist vorzugsweise eine Potentialwandlervorrichtung, deren Leistungsaufnahme unverändert bleibt, wohingegen deren Energieverbrauch gegenüber einer herkömmlichen Potentialwandlervorrichtung sinken kann.

Bei einer Energiequelle mit sehr geringer Energieausbeute kann es passieren, dass bei dem Einsatz eines Schaltreglers dieser im Betrieb annähernd die gleiche Leistung aufnimmt, als von der Energiequelle abgegeben wird. Bei üblichen Leistungsmanagement- (Power Management-) Konzepten werden in der Regel einzelne Funktionsblöcke z.B. durch separate Spannungsregler ab- und zugeschaltet. Dabei ist es erforderlich, dass die Energiequelle immer ausreichend Strom liefert, um mindestens die für die Steuerung und Überwachung notwendige Kontrolleinheit sowie die Spannungsregler mit Energie zu versorgen. Dadurch wird im regulären Betrieb immer ein Teil der Quellenergie für das Powermanagement aufgewendet.

Konventionelle Potentialwandlervorrichtungen bzw. Schaltregler verbrauchen selbst einen Teil der Energie, die sie umwandeln sollen. Liefert eine Energiequelle in etwa die gleiche Energie, wie der Schaltregler verbraucht, so steht am Ausgang für den eigentlichen Verbraucher nicht mehr ausreichend Energie zur Verfügung. Potentialwandlervorrichtungen können beispielsweise in batteriegespeisten Geräten eingesetzt werden, in denen die Elektronik einer Applikation gegenüber einer Batteriespannung eine höhere Spannung benötigt, so wie es z.B. bei Notebooks, Mobiltelefonen oder Photoblitzlichtgeräten der Fall ist. Weitere Beispiele für den Einsatz solcher Potentialwandlereinrichtungen sind die Übertragung von Messwerten von Sensoren, wie z.B. Temperatursensoren in einem Bratofen zur Übertragung von Temperaturwerten und/oder Druckwerten.

Die DE 197 54 964 A1 betrifft eine Vorrichtung zur Energieversorgung eines Kraftfahrzeugs. Die Vorrichtung zur Energieversorgung eines Kraftfahrzeugs umfasst eine aufladbare Batterie, einen Kondensator und einen zwischen der Batterie und dem Kondensator angeordneten Spannungswandler. Die Nennspannung des Kondensators ist dabei größer als die Nennspannung der Batterie. Die Aufladung des Kondensators erfolgt durch eine kurzfristig bei einem Kraftfahrzeug zur Verfügung stehenden Energieüberschuss, wie z. B. bei einem Bremsmanöver. Die Batterie soll mittels des eingangsseitig an dem Spannungswandler angeordneten Kondensator aufgeladen werden, wobei die Aufladung der Batterie mittels des Kondensators über den Spannungswandler gesteuert wird. So soll die Aufladung der Batterie mittels des Kondensators über den Spannungswandler derart gesteuert werden, dass der Kondensator maximal bis zum Erreichen eines Wertes der Kondensatorspannung entladen wird, der gleich dem Wert der Ist-Spannung der Batterie ist.

Die JP 2005 328662 A bezieht sich auf eine Leistungsversorgungsvorrichtung und ein Steuerungsverfahren zur Verwendung in der Leistungsversorgungsvorrichtung.

Die US 2004/078662 A1 bezieht sich auf einen Energy-Harvesting-Vorgang für einen drahtlosen Sensorbetrieb und eine Datenübertragung.

Es ist Aufgabe der vorliegenden Erfindung eine Vorrichtung und ein Verfahren zu schaffen, um ein leistungseffizientere Versorgung eines elektrischen Verbrauchers zu ermöglichen.

Diese Aufgabe wird gelöst durch die Vorrichtung gemäß Anspruch 1 und dem Verfahren gemäß Anspruch 15.

Die vorliegende Erfindung schafft eine Potentialwandlervorrichtung mit einem ersten Speicherkondensator S1, der ausgebildet ist, um aus einer Energiequelle mit Energie versorgt zu werden, um einen ersten Potentialverlauf an dem ersten Speicherkondensator S1 zu erhalten und einen zweiten Speicherkondensator S2, der ausgebildet ist, um aus dem ersten Speicherkondensator S1 mit Energie versorgt zu werden, um einen zweiten Potentialverlauf an dem zweiten Speicherkondensator S2 zu erhalten. Ferner weist die Potentialwandlervorrichtung eine Wandlereinrichtung auf, die elektrisch zwischen dem ersten und zweiten Speicherkondensator geschaltet ist und die ausgebildet ist, um eine Energieübertragung von dem ersten Speicherkondensator S1 auf den zweiten Speicherkondensator S2 vorzunehmen, falls der erste Potentialverlauf einen ersten Potentialschwellwert P1 erreicht, und bis der erste Potentialverlauf einen zweiten Potentialschwellwert P2 erreicht, und wobei der erste Potentialschwellwert P1 betragsmäßig größer ist, als der zweite Potentialschwellwert P2.

Die vorliegende Erfindung schafft ferner ein Verfahren zu einer Potentialwandlung. Das Verfahren weist ein Versorgen eines ersten Speicherkondensators S1 aus einer Energiequelle mit Energie auf, um einen ersten Potentialverlauf an dem ersten Speicherkondensator S1 zu erhalten. Ferner weist das Verfahren ein Versorgen eines zweiten Speicherkondensators S2, mit Energie aus dem ersten Speicherkondensator S1 auf, um einen zweiten Potentialverlauf an dem zweiten Speicherkondensator S2 zu erhalten. Das Verfahren zur Potentialwandlung weist ferner ein Übertragen einer Energie mit einer Wandlereinrichtung, die elektrisch zwischen dem ersten und dem zweiten Speicherkondensator geschaltet ist von dem ersten Speicherkondensator S1 auf den zweiten Speicherkondensator S2 auf, falls der erste Potentialverlauf einen ersten Potentialschwellwert P1 erreicht, und um die Energieübertragung zu beenden, falls der erste Potentialverlauf einen zweiten Potentialschwellwert P2 erreicht und wobei der erste Potentialschwellwert P1 betragsmäßig größer ist, als der zweite Potentialschwellwert P2.

Ausführungsbeispiele der vorliegenden Erfindung bieten den Vorteil, dass die Leistungsaufnahme einer Potentialwandlervorrichtung unverändert bleibt, jedoch deren Energieverbrauch deutlich sinkt, da die Potentialwandlervorrichtung während einer kürzeren Zeitperiode die Energie vom Speicherkondensator S1 auf den Speicherkondensator S2 überträgt, als während einer längeren anderen Zeitperiode, in der der Speicherkondensator S1 aus einer Energiequelle mit Energie versorgt wird. In Ausführungsbeispielen zu dem Verfahren zur Potentialwandlung bzw. der Potentialwandlervorrichtung kann ein deutlich höherer Wirkungsgrad durch eine höhere Leistung während der kurzzeitigen Übertragung der Energie von dem ersten Speicherkondensator S1 auf den zweiten Speicherkondensator S2 erzielt werden, gegenüber einer kontinuierlichen Energieübertragung, der um ein Vielfaches niedrigeren Leistung der Energiequelle auf dem Speicherkondensator S1.

In Ausführungsbeispielen der vorliegenden Erfindung wird ein erstes Energiespeicherelement der Potentialwandlervorrichtung mit Energie aus einer Energiequelle versorgt. Mit Hilfe einer Wandlereinrichtung wird die Energie bei Erreichen eines ersten Schwellenergiewertes auf ein zweites Energiespeicherelement der Potentialwandlervorrichtung übertragen, wobei die Energie in dem ersten Energiespeicherelement abnimmt. Bei Erreichen eines zweiten Schwellenergiewertes an dem ersten Energiespeicherelement wird die Wandlereinrichtung deaktiviert, so dass keine weitere Energie übertragen wird, bis der erste Schwellenergiewert durch die Versorgung mit Energie aus der Energiequelle auf dem ersten Energiespeicherelement wieder überschritten bzw. erreicht wird.

Ausführungsbeispiele der vorliegenden Erfindung werden nachfolgend Bezug nehmend auf die beiliegenden Zeichnungen näher erläutert. Es zeigen:
Fig. 1 eine schematische Blockdarstellung einer Potentialwandlervorrichtung gemäß einem Ausführungsbeispiel der vorliegenden Erfindung;
Fig. 2 ein schematisches Zeitdiagramm zur Veranschaulichung der Funktionsweise der Potentialwandlervorrichtung gemäß einem Ausführungsbeispiel der vorliegenden Erfindung;
Fig. 3 ein weiteres prinzipielles Blockschaltbild einer Potentialwandlervorrichtung mit einer Steuereinrichtung und einer Rückkopplungseinheit gemäß einem anderen Ausführungsbeispiel der vorliegenden Erfindung;
Fig. 4 eine Schaltung einer Wandlereinrichtung der Potentialwandlervorrichtung gemäß einem Ausführungsbeispiel der vorliegenden Erfindung;
Fig. 5a eine Komparator-Hystereseschaltung für eine Steuereinrichtung der Potentialwandlervorrichtung gemäß einem Ausführungsbeispiel der vorliegenden Erfindung;
Fig. 5b ein weiteres Ausführungsbeispiel für eine Steuereinrichtung der Potentialwandlervorrichtung; und
Fig. 6 ein Flussdiagramm zum Verfahren zur Potentialwandlung gemäß einem Ausführungsbeispiel der vorliegenden Erfindung.

Bezüglich der nachfolgenden Beschreibung der Ausführungsbeispiele der vorliegenden Erfindung sollte beachtet werden, dass in den unterschiedlichen Figuren für funktional, identische bzw. gleichwirkende oder funktionsgleiche äquivalente Elemente oder Schritte zur Vereinfachung in der gesamten Beschreibung die gleichen Bezugszeichen verwendet werden.

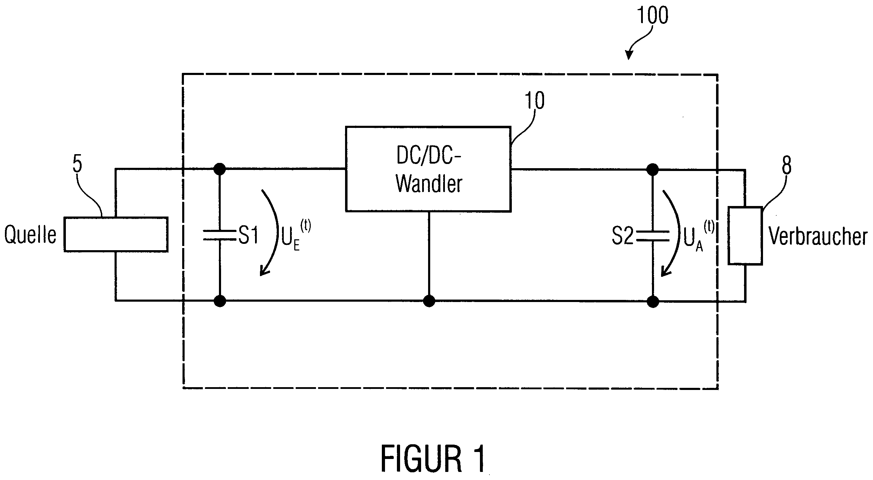

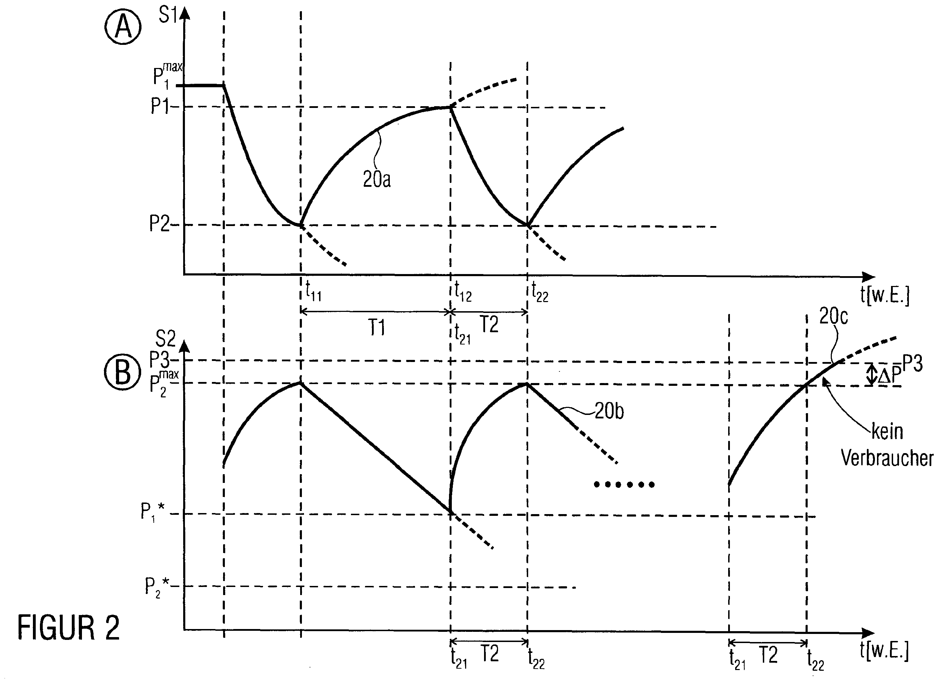

Fig. 1 zeigt ein prinzipielles Blockschaltbild eines Ausführungsbeispiels einer Potentialwandlervorrichtung 100 gemäß der vorliegenden Erfindung, welches im Folgenden unter Bezug auf Fig. 2 erläutert wird. Die Potentialwandlervorrichtung 100 in Fig. 1 weist ein erstes Speicherelement, beispielsweise einen Speicherkondensator S1 auf, der ausgebildet ist, um aus einer Energiequelle 5 mit Energie versorgt zu werden, um einen ersten Potentialverlauf an dem ersten Speicherkondensator S1 zu erhalten. Die Potentialwandlervorrichtung 100 weist in Fig. 1 ferner ein zweites Speicherelement, beispielsweise einen zweiten Speicherkondensator S2 auf, der ausgebildet ist, um aus dem Speicherkondensator S1 mit Energie versorgt zu werden, um einen zweiten Potentialverlauf an dem zweiten Speicherkondensator S2 zu erhalten. Die Potentialwandlervorrichtung 100 weist in Fig. 1 weiterhin eine Wandlereinrichtung 10 auf, bei der es sich beispielsweise um einen DC/DC-Wandler handelt, der elektrisch zwischen dem ersten S1 und zweiten S2 Speicherkondensator geschaltet ist und der ausgebildet ist, um eine Energieübertragung von dem ersten Speicherkondensator S1 auf den zweiten Speicherkondensator S2 vorzunehmen, falls der erste Potentialverlauf einen ersten Potentialschwellwert P1 erreicht und solange bis der erste Potentialverlauf einen zweiten Potentialschwellwert P2 erreicht, wobei der erste Potentialschwellwert P1 betragsmäßig größer ist, als der zweite Potentialschwellwert P2. Eine kontinuierliche Versorgung eines Verbrauchers 8 ist möglich, wenn der zweite Speicherkondensator S2 ausreichend dimensioniert ist.

Die Wandlereinrichtung 10 oder der Schaltregler ist so konzipiert, dass dieser ab einer definierten oberen Spannungsschwelle - der ersten Potentialschwelle P1 bezogen auf ein Bezugspotential - am Eingang beginnt, die Energie aus dem ersten Speicherkondensator S1 in den zweiten Speicherkondensator S2 am Ausgang der Wandlereinrichtung zu transferieren. Beispielsweise kann dann nach dem Prinzip eines Step-Up-Konverters bzw. eines Aufwärtswandlers, der zweite Speicherkondensator S2 auf ein höheres Potential bzw. bezogen auf ein Bezugspotential auf eine höhere Spannung aufgeladen werden. Diese höhere Spannung kann von einem Verbraucher 8 abgegriffen werden bzw. an einem Verbraucher 8 angelegt werden kann.

Bei Erreichen eines zweiten Potentialschwellwertes P2 bzw. einer zweiten unteren Schwellspannung kann der Schaltregler 10 seinen Betrieb einstellen. Das heißt, es wird aktiv keine Energie mehr von dem Speicherkondensator S1 auf den Speicherkondensator S2 übertragen. Durch die Energieübertragung bzw. den Energietransfer von dem ersten Speicherkondensator S1 auf den zweiten Speicherkondensator S2 mit Hilfe der Wandlereinrichtung sinkt der Potentialverlauf bzw. im Bezug auf ein Bezugspotential die abgreifbare Spannung am ersten Speicherkondensator S1. Während der Zeitdauer in der keine Energieübertragung von dem Speicherkondensator S1 auf den Speicherkondensator S2 durch die Wandlereinrichtung 10 durchgeführt wird, nimmt die Wandlereinrichtung bzw. der Schaltregler keine Leistung auf. In dieser Zeitdauer kann die gesamte Energie, die von der Quelle 5 bereitgestellt wird in den ersten Speicherkondensator S1 fließen. Bei Erreichen der oberen Schwelle, - der ersten Potentialschwellwertes P1 - kann die Energieübertragung durch die Wandlereinrichtung 10 vom ersten in den zweiten Speicherkondensator von neuem beginnen. Durch die Implementierung eines ersten Potentialschwellwertes und eines zweiten Potentialschwellwertes bzw. einer oberen und unteren Schwellspannung ergibt sich bei der Wandlereinrichtung 10 ein Hystereseverhalten.

Gemäß Ausführungsbeispielen der vorliegenden Erfindung kann die Wandlereinrichtung 10 so ausgebildet sein, um durch die Energieübertragung bzw. dem Energietransfer vom ersten Speicher S1 auf den zweiten Speicher S2 ein betragsmäßig größeres maximales Potential P₂^{max} am zweiten Speicher S2 auszubilden, als ein maximales Potential P₁^{max} am ersten Speicher S1, welches durch die Versorgung mit Energie aus der Energiequelle 5 aufgebaut wird. Dadurch kann eine maximale abgreifbare Ausgangsspannung U_{A}^{max} am Speicher S2 größer sein, als eine maximal am ersten Speicher S1, der Wandlereinrichtung zur Verfügung gestellte abgreifbare Eingangsspannung U_{E}^{max}, bezogen auf ein gemeinsames Bezugspotential. In anderen Worten kann durch eine Aufwärtswandlung einem Verbraucher 8 eine größere Spannung zur Verfügung gestellt werden, als eine Quelle 5 zur Verfügung stellt.

Mit Hilfe der Wandlereinrichtung 10 kann also die Potentialwandlervorrichtung 100 eine Quellspannung einer Energiequelle 5 in eine höhere Ausgangsspannung wandeln. Solche Wandlereinrichtungen können auf unterschiedliche Weise realisiert werden. Aufwärtswandler werden in vielen batteriegespeisten Geräten eingesetzt, in denen die Elektronik einer Applikation eine höhere Spannung benötigt, als beispielsweise von einer Batterie, die als Quelle fungiert, geliefert werden kann.

Bei der Wandlereinrichtung 10 kann es sich also beispielsweise um einen Gleichspannungswandler, wie z.B. einen Hochsetzteller bzw. Step-up-Konverter handeln. Die Wandlereinrichtung kann dabei so ausgebildet sein, dass in einem getakteten Betrieb Energie portionsweise von einer Eingangsseite, also dem ersten Speicherkondensator S1 auf die Ausgangsseite, also den Speicherkondensator S2 transportiert wird. Die Wandlereinrichtung 10 kann einen Schalter bzw. einen Leistungsschalter aufweisen, einen Energiespeicher und einen Glättungskondensator. Die abgreifbaren Spannungen bzw. der zweite Potentialverlauf an dem Speicherkondensator S2 können sich in ihrem Verlauf und in ihrer Größe unterscheiden und hängen u.a. von dem Verbraucher 8 und der von dem Verbraucher entnommenen Energie ab und den jeweiligen RC-Zeitkonstanten ab. Dies gilt sowohl für die Ausgangsseite, als auch für die Eingangsseite, bei der die RC-Konstante des Speicherkondensators S1 zusammen mit der Quelle 5 für den ersten zeitlichen Potentialverlauf ausschlaggebend ist. Bei der Wandlereinrichtung 10 kann es sich um einen induktiven Wandler handeln, der zu einer Zwischenspeicherung der Energie, die vom Speicherkondensator S1 zu dem Speicherkondensator S2 übertragen wird, eine Induktivität benutzt, wobei die Induktivität als Spule oder beispielsweise auch als Wandlertransformator ausgebildet sein kann. Es ist jedoch auch denkbar, dass die Wandlereinrichtung 10 als kapazitiver Wandler ausgebildet ist, bei der die zwischenzuspeichernde Energie kapazitiv gespeichert wird. Solche kapazitiven Wandler werden auch als Ladungspumpen bezeichnet. Die Wandlereinrichtung 10 kann beispielsweise auch als DC/DC-Wandler ausgebildet sein, der einen Transformator enthält und eine Potentialtrennung zwischen einer Eingangsseite der Wandlereinrichtung 10 und einer Ausgangsseite der Wandlereinrichtung 10 aufweist. Es kann also eine galvanische Trennung zwischen der Ein- und Ausgangsseite und damit zwischen der Eingangsspannung am Speicherkondensator S1 und der Ausgangsspannung, die von einem Verbraucher am Speicherkondensator S2 abgreifbar ist, vorliegen. Denkbar ist auch der Einsatz von Schaltnetzteilen, die als Wandlereinrichtung 10 dienen.

Die Potentialwandlervorrichtung 100 kann in einen anderen Ausführungsbeispiel eine Wandlereinrichtung 10 aufweisen, die ferner ausgebildet ist, um eine Energieübertragung vom ersten Speicherkondensator S1 auf den zweiten Speicherkondensator S2 zu beenden, falls der zweite Potentialverlauf an dem zweiten Speicherkondensator S2 einen dritten Potentialschwellwert P3 erreicht. In anderen Worten kann die Wandlereinrichtung 10 so ausgebildet sein, dass sie eine weitere Energieübertragung vom Speicherkondensator S1 auf den Speicherkondensator S2 beendet, falls eine vorbestimmte Ausgangsspannung am Speicherkondensator S2 abgreifbar ist. Dadurch kann also in einem Leerlaufbetrieb, während dessen von einem Verbraucher aus dem Speicherkondensator S2 keine Energie entnommen wird und daher die Ausgangspannung U_{A} ungeregelt ansteigen könnte, verhindert werden, dass die Potentialwandlervorrichtung zerstört werden würde.

In Ausführungsbeispielen der vorliegenden Erfindung kann dazu die Wandlereinrichtung 10 der Potentialwandlervorrichtung 100 eine Rückkoppelschleife bzw. Rückkoppeleinrichtung aufweisen, die so mit der Wandlereinrichtung gekoppelt ist, dass die Energieübertragung vom ersten Speicherkondensator S1 zu dem zweiten Speicherkondensator S2 beendet wird, wenn bezogen auf ein Bezugspotential eine vorbestimmte Ausgangsspannung U_{A} am zweiten Speicherkondensator S2 abgreifbar ist.

In Fig. 2 ist in einem schematischen Zeitdiagramm die Funktionsweise der Potentialwandlervorrichtung bzw. das Verfahren zum Wandeln eines Potentials schematisch dargestellt. In Fig. 2 ist zum einen in dem Diagramm A der erste Potentialverlauf 20a des ersten Speicherkondensators S1 schematisch dargestellt und in dem zweiten Diagramm B der zweite Potentialverlauf 20b des zweiten Speicherkondensators S2. Auf der X-Achse beider Diagramme ist der zeitliche Verlauf des ersten und zweiten Potentialverlaufes 20a und 20b in willkürlichen Einheiten dargestellt. Auf den Y-Achsen der beiden Diagramme A und B sind die jeweiligen Potentiale - bzw. bezogen auf ein Bezugspotential wie z.B. der Masse - die Spannungswerte an dem ersten Speicherkondensator S1 und dem zweiten Speicherkondensator S2 dargestellt. Die Potentialwandlervorrichtung kann zyklisch bzw. periodisch arbeiten und sich in Auflade- bzw. Entladezeitabschnitte aufteilen. Beispielsweise wird ausgehend von der Situation, in der durch eine Energiequelle der erste Speicherkondensator S1 auf einen maximalen Potentialwert P₁^{max}, welcher durch die Energiequelle gegeben ist und der höher oder identisch sein kann zu dem ersten Potentialschwellwert P1, der zweite Speicherkondensator S2 (Diagramm B) bis zu einem maximalen Potentialwert P₂^{max} aufgeladen. Dies kann beispielsweise mit einer Wandlereinrichtung, die als Aufwärtswandler ausgebildet ist durchgeführt werden, so dass der maximale Potentialwert P₂^{max} größer ist, als der maximale Potentialwert P₁^{max}. Durch die Übertragung der Wandlereinrichtung sinkt das Potential bzw. die Spannung am ersten Speicherkondensator S1 (Diagramm A) bis die erste Potentialverlaufskurve 20a zum Zeitpunkt t₁₁ den zweiten Potentialschwellwert P2 erreicht. Bei Erreichen dieses unteren Potentialschwellwertes P2 stellt die Wandlereinrichtung 10 ihren Betrieb ein und überträgt damit keine weitere Energie von dem Speicherkondensator S1 auf den Speicherkondensator S2. Ab dem Zeitpunkt t₁₁ fließt also die gesamte Energie (also die Ladung der Quelle 5 (siehe Fig. 1)) wieder in den ersten Speicher S1. Der erste Speicherkondensator S1 lädt sich dann u.a. abhängig von dessen RC-Konstante auf. Sobald der erste Potentialverlauf 20a zum Zeitpunkt t₁₂ den ersten Potentialschwellwert P1 erreicht, wird eine Energieübertragung durch die Wandlereinrichtung von dem Speicherkondensator S1 auf den zweiten Speicherkondensator S2 vorgenommen. Der erste Speicherkondensator S1 wird also in einer ersten Zeitperiode T1, deren Anfangszeitpunkt t11 durch das Erreichen des zweiten Potentialschwellwertes P2 und dessen Endzeitpunkt t₁₂ durch das Erreichen des ersten Potentialschwellwertes P1 im ersten Potentialverlauf 20a gegeben ist, durch die Energiequelle aufgeladen. Während dieser Zeit kann aus dem zweiten Speicherkondensator S2, wie der zweiten Potentialverlaufskurve 20b (Diagramm B) zu entnehmen ist, abhängig von einem angeschlossenen Verbraucher 8 Energie entnommen werden. In dem Beispiel in Fig. 2 weist ein Verbraucher einen linearen Leistungsverbrauch auf. Wie der zweiten Potentialverlaufskurve 20b zu entnehmen ist, findet zum Zeitpunkt t₂₁, der dem Zeitpunkt t₁₂ entsprechen kann, eine Energieübertragung von dem ersten Speicherkondensator S1 auf den zweiten Speicherkondensator S2 statt. Zu diesem Zeitpunkt weist der zweite Speicherkondensator S2 ein Potential P₁^{*} auf. Bei einem Unterschreiten eines Potentials P₂^{*} am zweiten Speicherkondensator S2 würde ein Verbraucher, der an den zweiten Speicherkondensator angeschlossen ist, nicht mehr funktionieren. Durch die Energieübertragung kann die zweite Potentialverlaufskurve 20b abhängig von der genauen Funktionsweise der Wandlereinrichtung rascher ansteigen, als die erste Potentialverlaufskurve 20a in der ersten Zeitperiode T1. Durch den Energietransfer sinkt, die erste Potentialverlaufskurve 20a während dieser zweiten Zeitperiode T2 am ersten Speicherkondensator S1 wieder. Der Endzeitpunkt t₂₂ der zweiten Zeitperiode T2 ist dann wieder durch das Erreichen des zweiten Potentialschwellwertes in der ersten Potentialsverlaufskurve 20a bestimmt. Das heißt, die jeweiligen ersten Zeitperioden T1 und die jeweiligen zweiten Zeitperioden T2 können untereinander auch unterschiedlich lang sein. Der Verbraucher kann bei Unterschreiten des Potentials P₂^{*} am Speicherkondensator S2 inaktiv sein und nach einer Energieübertragung vom ersten auf den zweiten Speicherkondensator, z.B. ab einem Potentialwert P₁^{*} am Speicherkondensator S2, wieder anfangen zu arbeiten bzw. Energie zu verbrauchen. Falls die Energiequelle nur eingeschränkt Energie an den ersten Speicherkondensator S1 liefern kann, kann der Verbraucher bei einem Unterschreiten des Potentials P₂^{*} und nach einer anschließenden Energieübertragung wieder anfangen zu arbeiten bzw. Energie zu verbrauchen, falls die Spannung auf der Sekundärseite (Ausgangsseite) wieder über einer, für den bestimmten Verbraucher typischen, Startspannung liegt. Der Vorgang des Abschaltens des Verbrauchers bei Unterschreitung des Potentials P₂^{*} am zweiten Speicherkondensator S2 und des Neustarts bei Überschreiten der Startspannung des Verbrauchers am zweiten Speicherkondensator S2, kann sich z.B. zyklisch oder in aperiodischen Zeitperioden wiederholen.

Mit der Potentialverlaufskurve 20c ist beispielsweise die Situation veranschaulicht, in der kein Verbraucher Energie aus dem zweiten Speicherkondensator S2 entnimmt und die Wandlereinrichtung weiter Energie von dem ersten Speicherkondensator S1 auf den zweiten Speicherkondensator S2 überträgt. Die Potentialwandlervorrichtung kann nun beispielsweise eine Steuereinrichtung oder eine Rückkoppeleinrichtung aufweisen, die so ausgebildet ist um die Übertragung der Energie von dem ersten Speicherkondensator S1 auf den zweiten Speicherkondensator S2 zu beenden falls ein dritter Potentialschwellwert P3 erreicht wird. Der Unterschied ΔP zwischen dem maximalen Potentialwert P₂^{max} und P3 kann null sein, d.h. beide sind identisch, oder aber auch von null verschieden.

Allgemein liegt dem Verfahren zur Potentialwandlung bzw. der Potentialwandlervorrichtung in diesem Ausführungsbeispiel zugrunde, dass in einem bestimmten Zeitraum, beispielsweise der ersten Zeitperiode T1 Energie in dem Speicherkondensator S1 gesammelt wird, die dann mit Hilfe der Wandlervorrichtung um ein Vielfaches schneller bzw. mit einer höheren elektrischen Leistung auf die Ausgangsseite der Wandlereinrichtung also auf den zweiten Speicherkondensator S2 übertragen wird. Während der Energieübertragung findet gleichzeitig die Aufwärtswandlung einer Spannung statt. Während auf der Eingangsseite also am ersten Speicherkondensator S1 ein maximales Potential P₁^{max} erreicht werden kann, welches durch die Energiequelle 5 bestimmt ist und mit P1 übereinstimmen kann, so kann auf der Ausgangsseite abhängig von der Wandlereinrichtung ein größeres Potential P₂^{max} und damit eine höhere Ausgangsspannung U_{A}^{max}, ausgebildet werden, die einem Verbraucher zur Verfügung gestellt werden kann. In der Zeit, also beispielsweise in der ersten Zeitperiode T1, in der keine Energieübertragung durch die Wandlereinrichtung vom ersten Speicherkondensator S1 auf den zweiten Speicherkondensator S2 stattfindet, da die Wandlereinrichtung abgeschaltet ist, kann eine kontinuierliche Versorgung eines Verbrauchers mit Energie möglich sein, wenn der zweite Speicherkondensator S2 geeignet dimensioniert ist. Wie der zweiten Potentialverlaufskurve 20b zu entnehmen ist, sinkt das Potential des zweiten Speicherkondensators S2 je nach Verbrauch. Unter der Annahme das ein Verbraucher einen Lastwiderstand R aufweist, kann die RC-Zeitkonstante des Speicherkondensators S2 so ausgelegt sein, dass die Ausgangspannung U_{A}, trotz Energieentnahme durch den Verbraucher, in der ersten Zeitperiode T1 nicht unter das zweite Potential P2 absinkt.

Wie der Fig. 2 weiterhin zu entnehmen ist, können sich die Zeitperioden T1 und T2 zyklisch bzw. periodisch wiederholen, wobei eine Wandlereinrichtung während der Zeitperiode T2 Energie von dem Speicher S1 auf den Speicher S2 überträgt und während der ersten Zeitperiode T1 nicht. Das heißt, nach der Übertragung der Energie also beim Endzeitpunkt t₂₂ der Energieübertragung kann eine zeitliche Pause entstehen, in der die Wandlereinrichtung inaktiv ist und selbst keine Leistung aufnimmt bzw. verbraucht. Dadurch verringert sich der Verbrauchsanteil der Wandlereinrichtung an dem Gesamtenergieverbrauch der Potentialwandlervorrichtung. Das heißt, die Leistungsaufnahme der Wandlereinrichtung bleibt unverändert, jedoch sinkt deren Energieverbrauch deutlich, da sie nur kurze Zeit, während des Energietransfers aktiv ist. Daher kann die hier vorgestellte Potentialwandlervorrichtung weniger Energie verbrauchen als herkömmliche Potentialwandlervorrichtungen.

Ausführungsbeispiele gemäß der vorliegenden Erfindung zeigen eine Potentialwandlervorrichtungen, bei der ein erster Speicherkondensator S1 in einer ersten Zeitperiode T1, deren Anfangszeitpunkt t₁₁ durch das Erreichen des zweiten Potentialschwellwertes P2 und dessen Endzeitpunkt t₁₂ durch das Erreichen des ersten Potentialschwellwertes P1 im ersten Potentialverlauf gegeben ist, aufgeladen wird, und bei dem die Wandlereinrichtung ausgebildet ist, um die Energieübertragung nur in einer zweiten Zeitperiode T2, deren Anfangszeitpunkt t₂₁ durch das Erreichen des ersten Potentialschwellwertes P1 und dessen Endzeitpunkt t₂₂ durch das Erreichen des zweiten Potentialschwellwertes P2 im ersten Potentialverlauf gegeben ist durchzuführen. Die zweite Zeitperiode T2 kann kürzer sein, als die erste Zeitperiode T1 und damit kann die Wandlereinrichtung nur während der kürzeren Zeitperiode T2 aktiv elektrische Leistung aufnehmen und während der längeren ersten Zeitperiode T1 nicht. Dadurch kann ein Wirkungsgrad η = P_{Abgabe}/P_{Aufnahme} gegenüber einer konventionellen Potentialwandlervorrichtung verbessert werden. Der Wirkungsgrad η der Potentialwandlervorrichtung kann in Ausführungsbeispielen beispielsweise 70% bis 80% oder größer als 80% sein.

In Ausführungsbeispielen der vorliegenden Erfindung kann das Verhältnis der ersten Zeitperiode T1 zu der zweiten Zeitperiode T2 beispielsweise zwischen 10 und 500, zwischen 100 und 400, oder größer als 5 bzw. größer als 10 sein. Die erste Zeitperiode T1 kann in einem Ausführungsbeispiel beispielsweise 100ms betragen und die zweite Zeitperiode T2 2ms.

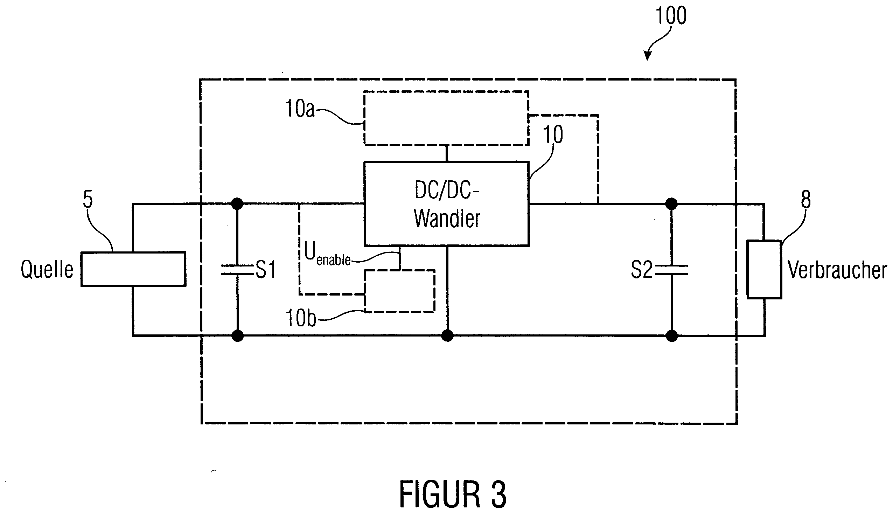

In Fig. 3 ist schematisch ein weiteres Ausführungsbeispiel zur vorliegenden Erfindung für eine Potentialwandlervorrichtung dargestellt. Die Potentialwandlervorrichtung 100 kann wie im Zusammenhang mit Fig. 1 beschrieben ist einen ersten Speicherkondensator S1 und einen zweiten Speicherkondensator S2 aufweisen, die mit einer Quelle 5 bzw. einem Verbraucher 8 elektrisch verbunden werden können, sowie eine Wandlereinrichtung 10, die zwischen S1 und S2 gekoppelt ist. Die Wandlereinrichtung 10 kann ferner eine Rückkoppeleinrichtung bzw. eine Rückkoppelschleife 10a aufweisen, die so mit der Wandlereinrichtung gekoppelt ist, dass die Energieübertragung vom Speicherkondensator S1 zu dem Speicherkondensator S2 beendet wird, wenn bezogen auf ein Bezugspotential eine vorbestimmte Ausgangsspannung U_{A} am zweiten Speicherkondensator S2 durch einen Verbraucher 8 abgreifbar ist. Die Potentialwandlervorrichtung 100 kann ferner eine Steuereinrichtung 10b aufweisen, wobei die Steuereinrichtung beispielsweise eine Komparator-Hystereseschaltung bzw. eine Schmitt-Triggerschaltung sein kann, die ausgebildet ist, um die Energieübertragung von dem ersten Speicherkondensator S1 auf den zweiten Speicherkondensator S2 zu veranlassen, in dem sie die Wandlereinrichtung 10 einschaltet, falls ein Spannungswert, der durch einen aktuellen Potentialwert des ersten Potentialverlaufs gegenüber einem Bezugspotential gegeben ist, größer ist, als ein erster Schwellspannungswert U1, der durch den ersten Potentialschwellwert P1 gegenüber dem Bezugspotential gegeben ist. Die Steuereinrichtung 10b kann ferner so ausgebildet sein, die Wandlereinrichtung 10 auszuschalten, um die Energieübertragung von dem ersten Speicher S1 auf den zweiten Speicherkondensator S2 zu beenden, falls ein Spannungswert, der durch einen aktuellen Potentialwert der ersten Potentialverlaufskurve gegenüber einem Bezugspotential gegeben ist, kleiner ist, als ein zweiter Schwellspannungswert U2, der durch den zweiten Potentialschwellwert P2 gegenüber dem Bezugspotential gegeben ist. Die Steuereinrichtung 10b kann den DC/DC-Wandler 10 bei Erreichen der jeweiligen Schwellspannungswerte mit der Spannung U_{enable} ein- und ausschalten. Gemäß einem Ausführungsbeispiel kann die erste Schwellwertspannung U1 beispielsweise 1.0V sein, die zweite Schwellwertspannung U2 kann 0.3V sein und die Ausgangsspannung U_{A} kann 3V sein.

Es sollte darauf hingewiesen werden, dass es sich bei den Potentialwerten sowohl um positive Potentialwerte als auch um negative Potentialwerte bzw. um positive oder negative Spannungsversorgungen handeln kann und daher immer von einer betragsmäßigen Betrachtungsweise der Potentialwerte bzw. der Potentialschwellwerte ausgegangen werden sollte.

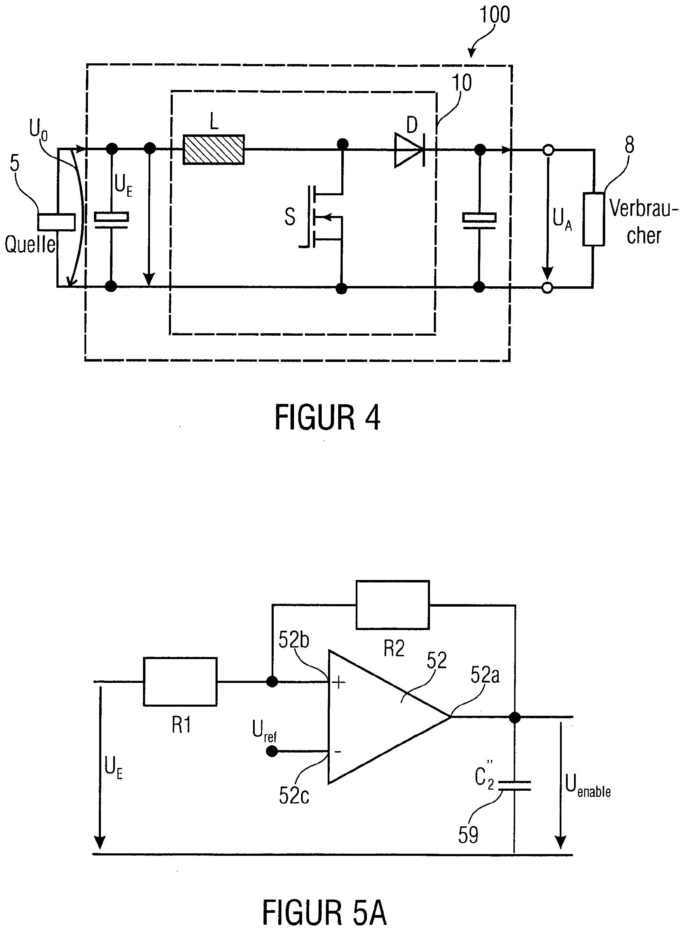

Gemäß dem Ausführungsbeispiel in Fig. 4 kann die Potentialwandlervorrichtung 100 als Wandlereinrichtung 10 eine Aufwärtswandlerschaltung aufweisen. Eine Spannungsquelle 5 kann eine Leerlaufspannung U₀ aufweisen und einen hohen Innenwiderstand besitzen, so dass im unbelasteten Zustand die Ausgangsspannung der Spannungsquelle gleich der Leerlaufspannung U₀ entspricht und der angeschlossene Speicherkondensator S1 entsprechend aufgeladen wird. Der Speicherkondensator S1 kann weiterhin an eine Induktivität, beispielsweise eine Spule L angeschlossen sein. Die Induktivität L kann in Reihe mit einer Diode D geschaltet sein, hinter der ein zweiter Speicherkondensator S2 eine Ausgangsspannung U_{A} aufsummiert, die von einem Verbraucher bzw. einer Last dem zweiten Speicherkondensator S2 entnommen werden kann. Die Induktivität L kann über einen Schalter S, der als Transistor ausgebildet sein kann, gegen Masse geschaltet sein. Die Steuerung des Schalters S bzw. des Transistors kann über eine Steuervorrichtung 10b (nicht gezeigt in Fig. 4) und/oder über eine Rückkopplungseinrichtung 10a getätigt werden.

Bei geöffnetem Schalter bzw. wenn der Transistor sperrt, fließt ein Strom von dem ersten Speicherkondensator S1 durch die Spule L, durch die in Flussrichtung gepolte Diode und lädt den zweiten Speicherkondensator S2 auf. Der zweite Speicherkondensator S2 wird also auf den Wert der Eingangsspannung U_{E}, der von dem ersten Speicherkondensator S1 abgreifbar ist, aufgeladen. Durch die Energieübertragung von dem ersten Speicherkondensator S1 auf den zweiten Speicherkondensator S2 sinkt die Spannung am ersten Speicherkondensator S1. Wird der Schalter S geschlossen bzw. der Transistor durchgeschaltet, fließt ein Strom vom ersten Speicherkondensator S1 über den Schalter S nach Masse. Der resultierende Stromfluss wird durch die Induktivität L und die ohmschen Widerstände der Spule und des Transistors bestimmt. Die Diode D sperrt in diesem Zustand und somit wird der zweite Speicherkondensator S2 nicht entladen. Das heißt, die Ausgangsspannung U_{A} wird am zweiten Speicherkondensator gehalten. Falls nun der Schalter geöffnet wird bzw. der Transistor wieder sperrt, kann sich der Spulenstrom in der Induktivität nicht instantan ändern, sondern seine Größe und Flussrichtung bleiben zuerst gleich. Da der Schalter gesperrt ist, fließt ein Strom durch die Diode und lädt damit den zweiten Speicherkondensator S2 weiter auf. Da der zweite Speicherkondensator S2 bereits auf dem Potentialwert des ersten Speicherkondensators S1 liegt, wird durch die weitere Ladung, die auf dem zweiten Speicherkondensator S2 aufgebracht wird, dessen Potentialwert über dem Potentialwert des ersten Speicherkondensators ausgebildet. Das heißt, am zweiten Speicherkondensator S2 kann eine höhere Ausgangsspannung zur Verfügung gestellt werden, als von dem ersten Speicherkondensator S1 abgreifbar ist. Das getaktete Ein- und Ausschalten des Schalters S während der zweiten Zeitperiode T2 zur Energieübertragung der Wandlereinrichtung kann beispielsweise mit einem Impulsbreitenmodulator durchgeführt werden. Die am zweiten Speicherkondensator abgreifbare Ausgangsspannung U_{A} kann von dem Tastverhältnis, also dem Verhältnis zwischen der Zeit in der der Transistor während der zweiten Zeitperiode T2 eingeschaltet ist und der Zeit in der Transistor während der zweiten Zeitperiode T2 ausgeschaltet ist abhängen. Das getaktete Ein- und Ausschalten des Transistors bzw. des Schalters S während der zweiten Zeitperiode T2 kann beispielsweise mit einer Frequenz von 1 kHz bis 5 MHz erfolgen, also beispielsweise mit 100 kHz. Während der ersten Zeitperiode T1 kann der Schalter S gemäß Ausführungsbeispielen der Erfindung deaktiviert sein. Gemäß einem weiteren Ausführungsbeispiel kann die Wandlereinrichtung so ausgebildet sein, dass sie die Ausgangsspannung U_{A} konstant hält in dem sie das Tastverhältnis zur Energieübertragung reduziert bzw. an eine Energieentnahme aus dem zweiten Kondensator S2 durch einen Verbraucher anpasst oder die Wandlung beendet, falls ein Verbraucher keine Energie aus dem zweiten Speicher oder Kondensator S2 entnimmt.

Während des getakteten Betriebes wird Energie portionsweise von dem ersten Speicherkondensator S1 auf den zweiten Speicherkondensator S2 übertragen. Das heißt, der getaktete Betrieb zur Aufwärtswandlung der Spannung und zum Energie-übertrag kann in Ausführungsbeispielen nur während der zweiten Zeitperiode T2 (siehe Fig. 2) durchgeführt werden. Nur in der zweiten Zeitperiode T2 verbraucht die Wandlereinrichtung 10, also beispielsweise der Aufwärtswandler wie er in Fig. 4 beschrieben ist, aktiv Energie. In diesem Zeitraum (zweite Zeitperiode T2) kann dann nur eine Verlustleistung auftreten, die die Gesamtenergiebilanz der Potentialwandlereinrichtung bzw. den Wirkungsgrad der Potentialwandeleinrichtung reduziert. Im Gegensatz zu kontinuierlich arbeitenden Wandlereinrichtungen ist also eine Verlustleistung durch den Betrieb der Wandlereinrichtung reduziert. Die Schaltung zum hochfrequenten Takten des Schalters zur Aufwärtswandlung kann Teil der Rückkopplungseinrichtung 10a (Fig. 3) sein. In der Rückkopplungseinrichtung 10a kann also das hochfrequente Taktsignal für die Wandlereinrichtung 10 während der Zeitperiode T2 erzeugt werden. Die Steuereinrichtung 10b kann hingegen das Ein- und Ausschalten der Wandlereinrichtung 10 bei Erreichen der entsprechenden Potential- bzw. Spannungsschwellwerte durchführen.

In einem Ausführungsbeispiel der vorliegenden Erfindung ist die Wandlereinrichtung als Aufwärtswandler ausgebildet, wobei eine Induktivität L an eine Eingangsspannung U_{E}, welche durch den aktuellen Potentialwert des ersten Potentialverlaufs vom ersten Speicherkondensator S1 gegenüber einem Bezugspotential gegeben ist, über einen ersten Anschlusspunkt verbunden ist. Der zweite Anschlusspunkt der Induktivität L ist zum einen parallel mit einem Schalter S, der mit dem Bezugspotential verbunden ist und zum anderen mit einer Diode D, die in Durchlassrichtung geschaltet ist und die an dem zweiten Speicherkondensator S2 angeschlossen ist, verbunden.

In Ausführungsbeispielen der vorliegenden Erfindung kann die Wandlereinrichtung einen Schalter S aufweisen, der als Transistor ausgebildet ist, der durch eine Komparatorschaltung mit Hysterese bzw. einer Schmitt-Trigger-Schaltung bei Erreichen einer ersten Schwellspannung U1 eingeschaltet wird und bei Erreichen einer zweiten Schwellspannung U2 von der Schmitt-Trigger-Schaltung bzw. der Komparatorschaltung mit Hysterese ausgeschaltet wird.

Gemäß einem weiteren Ausführungsbeispiels der Potentialwandlervorrichtung kann die Wandlereinrichtung 10 so ausgebildet sein, dass bei der Energieübertragung vom ersten Speicherkondensator S1 auf den zweiten Speicherkondensator S2, der zweite Potentialverlauf am zweiten Speicherkondensator S2 einen maximalen Potentialwert P₂^{max} erreicht, der betragsmäßig größer ist, als ein maximaler Potentialwert P₁^{max} des ersten Potentialverlaufes am ersten Speicherkondensator S1, der auf der Versorgung mit Energie aus der Energiequelle basiert.

In Ausführungsbeispielen der vorliegenden Erfindung kann die Wandlereinrichtung beispielsweise als Ladungspumpe, als lineare Spannungsregler, als Schaltregler, als Schaltnetzteil oder als DC/DC-Wandler ausgebildet sein.

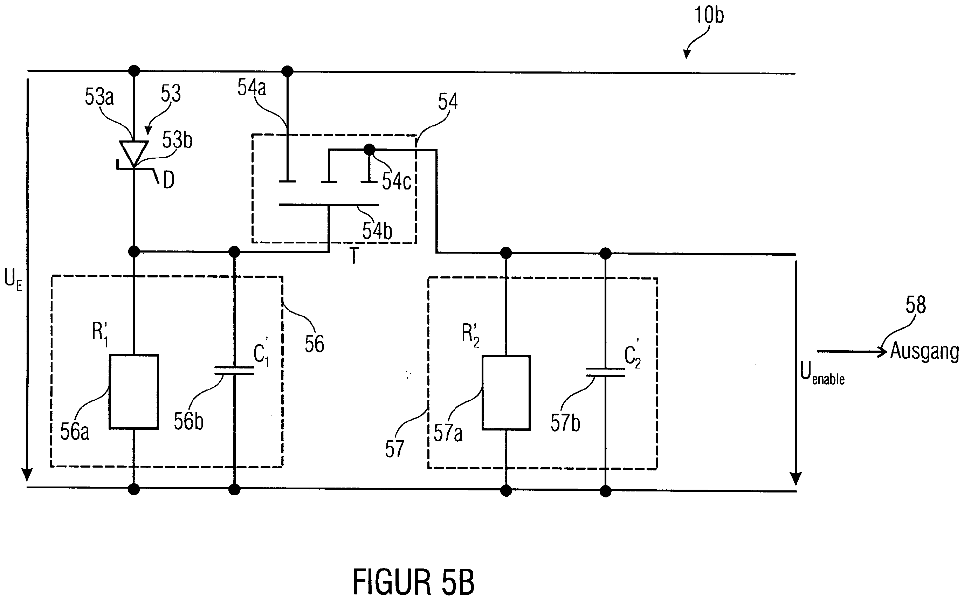

In Fig. 5a ist als weiteres Ausführungsbeispiel eine Schmitt-Trigger-Schaltung bzw. eine Komparator-Hystereseschaltung dargestellt, wie sie in einer Steuereinrichtung für die Wandlereinrichtung der Potentialwandlervorrichtung eingesetzt werden kann. Eine Steuereinrichtung 10b kann intern in der Potentialwandlervorrichtung oder auch in der Wandlereinrichtung integriert sein oder aber ihre Steuersignale von außerhalb der Potentialwandlervorrichtung zuführen. Die Schmitt-Trigger-Schaltung in Fig. 5a kann so ausgebildet sein, dass sie eine Wandlereinrichtung der Potentialwandlervorrichtung einschaltet, um die Energieübertragung von dem ersten Speicherkondensator S1 auf den zweiten Speicherkondensator S2 vorzunehmen, falls ein Spannungswert, der durch einen aktuellen Potentialwert des ersten Potentialverlaufes gegenüber einem Bezugspotential gegeben ist, betragsmäßig größer ist, als ein erster Schwellspannungswert U1, der durch den ersten Potentialschwellwert P₁ gegenüber dem Bezugspotential gegeben ist. Die Schmitt-Trigger-Schaltung in Fig. 5 kann außerdem so ausgebildet sein, die Wandlereinrichtung auszuschalten, um die Energieübertragung von dem ersten Speicherkondensator S1 auf den zweiten Speicherkondensator S2 zu beenden, falls ein Spannungswert, der durch einen aktuellen Potentialwert des ersten Potentialverlaufes gegenüber dem Bezugspotential gegeben ist, betragsmäßig kleiner ist, als ein zweiter Schwellspannungswert U2, der durch den zweiten Potentialschwellwert P2 gegenüber dem Bezugspotential gegeben ist. Die Schmitt-Trigger-Schaltung der Fig. 5a weist einen Operationsverstärker 52 auf, wobei der Ausgang des Operationsverstärkers 52a über einen Widerstand R2, welcher mit dem nicht-invertierenden Eingang des Operationsverstärkers verbunden ist rück- bzw. mitgekoppelt ist. Dem nicht-invertierenden Eingang 52b ist ein weiterer Widerstand 56 vorgeschaltet. Der invertierende Eingang 52c ist auf das Referenzpotential U_{ref} gelegt. In Abhängigkeit der Widerstände R2 und R1 ergeben sich bei Mitkopplung unterschiedliche Schaltschwellen für ein steigendes bzw. ein fallendes Eingangssignal. Die Schmitt-Trigger-Schaltung ist als Schalter zu verstehen, der im Gegensatz zu einem einfachen Transistor nicht nur eine Schaltschwelle aufweist, sondern zwei definierte Schaltschwellen, je eine für die fallende und eine für die steigende Flanke. Für die jeweiligen Spannungsschwellen sind die Widerstände R2 und R1 verantwortlich. Dabei gilt für die Komparatorschaltung mit Hysterese in Fig. 5a, dass das Verhältnis von Eingangsspannung U_{E} zu Ausgangsspannung U_{enable} dem Verhältnis des Widerstands R2 zu dem Widerstand R1 entspricht. Die Hysterese bzw. der Kopplungsgrad und der Abstand zwischen dem oberen Schwellspannungswert U1 und dem unteren Schwellspannungswert U2 kann also von den Widerstandswerten R1 und R2 bzw. deren Verhältnissen und den Spannungen U_{E} und U_{enable} abhängen.

Die Komparator-Hystereseschaltung kann also eine Ausgangsspannung U_{enable} zur Verfügung stellen, mit der eine Wandlereinrichtung 10 (Fig. 3) zu Beginn der Zeitperiode T2 eingeschaltet und bei Beendigung der Zeitperiode T2 ausgeschaltet wird.

Die Schmitt-Trigger-Schaltung bzw. Komparator-Hystereseschaltung kann ferner ein Kapazitätselement 59 mit einem Kapazitätswert C"2 aufweisen, welches zwischen dem Komparatorausgang 52a und dem entsprechenden Bezugspotential der Schaltung angeordnet ist. Das Kapazitätselement 59 kann als Verzögerungsglied, also zur zeitlichen Verzögerung des Schaltvorgangs an der Wandlereinrichtung 10 dienen, welche von der Komparator-Hystereseschaltung gesteuert wird. Bei einem Unterschreiten der unteren Schwellwertspannung wird also beispielsweise die Wandlereinrichtung 10, welche durch die Komparator-Hystereseschaltung ein- und ausgeschaltet wird, nicht unmittelbar abgeschaltet, sondern bleibt durch die Pufferwirkung des Kondensators C"2 noch einige Zeit aktiv und eingeschaltet.

Die Referenzspannung U_{ref} weist vorzugsweise einen Spannungswert auf, der zwischen einem oberen Schwellspannungswert U1 der Eingangsspannung U_{E} und einem unteren Schwellspannungswert U2 der Eingangsspannung U_{E} liegt. Bei einem oberen Schwellspannungswert U1 von beispielsweise 1.5V und einem unteren Schwellspannungswert U2 von beispielsweise 0.5V, kann die Referenzspannung U_{ref} beispielsweise 1.0 V betragen. Für die Ausgangsspannung U_{enable} kann sich beispielsweise bei Unterschreiten des unteren Schwellspannungswertes U2 ein Spannungswert von 0V und bei Überschreiten des oberen Schwellspannungswertes U1 ein spannungswertes von 2V ergeben.

In Ausführungsbeispielen der vorliegenden Erfindung kann also die Steuereinrichtung eine Komparatorschaltung mit Hysterese (Komparator-Hystereschaltung) aufweisen, die beispielsweise einen Operationsverstärker mit einem Mitkopplungswiderstand R2 und einen zweiten Widerstand R1 aufweist. Die Komparatorschaltung mit Hysterese kann so ausgebildet sein, dass sie als Spannungsschwellwertschalter die Wandlereinrichtung 10 (beispielsweise Fig. 3) bei Erreichen der ersten Schwellwertspannung U1 einschaltet und bei Erreichen der zweiten Schwellwertspannung U2 ausschaltet.

Fig. 5b zeigt ein weiteres Ausführungsbeispiel einer Steuereinrichtung 10b zum Schalten einer Wandlereinrichtung. Die Steuereinrichtung 10b kann eine Wandlereinrichtung, die über einen entsprechenden Steuereingang verfügt, beispielsweise so schalten, dass die Wandlereinrichtung in der in Fig. 2 angegebenen Zeitperiode T1 inaktiv ist und in der Zeitperiode T2 aktiv ist. Das heißt, bei Erreichen eines ersten Potentialschwellwertes P1 bzw., bezogen auf ein Bezugspotential, eines Spannungsschwellwertes U1 wird die Wandlereinrichtung durch die Steuereinrichtung 10b aus Fig. 5b aktiviert. Beispielsweise kann dann die Wandlereinrichtung, die ein DC/DC Wandler sein kann, durch ein getaktetes Ein- und Ausschalten eines Schalters S des Wandlers (siehe Fig. 4) in der Zeitperiode T2 eine Energieübertragung von dem ersten Speicherkondensator S1 auf den zweiten Speicherkondensator S2 vornehmen. Das getaktete Ein- und Ausschalten kann beispielsweise mit einer Frequenz von 100 kHz erfolgen.

Bei Erreichen eines zweiten Potentialschwellwertes P2 bzw. eines zweiten Spannungsschwellwertes U2 kann dann die Steuereinrichtung in Fig. 5b die Wandlereinrichtung deaktivieren, so dass in dieser Zeitperiode T1 kein aktiver Energie-übertrag von S1 nach S2 und kein getaktetes Ein- und Ausschalten des Schalters S des DC/DC-Wandlers stattfindet. Während dieser Zeitperiode T1 kann der erste Speicherkondensator S1 mit Energie von einer Energiequelle 5 versorgt werden und der Potentialverlauf an S1 wieder den Potentialschwellwert P1 erreichen.

Im Folgenden wird die Steuereinrichtungsschaltung und deren Funktion beschrieben. Die Steuereinrichtung 10b (Fig. 5b) ist an eine Eingangsspannung U_{E} gekoppelt, die der am Speicherkondensator S1 abgreifbaren Spannung U_{E}(t) (siehe Fig. 1) entsprechen kann. Eine Diode, z. B. eine Schottkydiode 53 ist mit einem Transistor 54 so verbunden, dass der Anodenanschluss 53a der Schottkydiode 53 mit einem ersten Anschluss 54a eines Transistors 54 gekoppelt ist. Der Kathodenanschluss 53b der Schottkydiode ist zum einen mit dem Steueranschluss 54b des Transistors 54 gekoppelt und zum anderen mit einem RC-Glied 56, welches einen parallel verschaltetes Widerstandselement 56a mit einem Widerstand R'1 und ein Kapazitätselement 56b mit einem Kapazitätswert C'1 aufweist. Zwischen dem Anodenanschluss 53a der Schottkydiode 53 und dem RC-Glied 56 liegt die Eingangsspannung U_{E} an.

Der zweite Anschluss 54c des leitfähigen Pfades des Transistors 54 ist mit einem weiteren RC-Glied 57 gekoppelt. Das RC-Glied 57 weist ebenfalls, ein mit einem Kapazitätselement 57b, welches einen Kapazitätswert C'2 hat, parallel verschalteten Widerstandselement 57a auf. Das Widerstandselement 57a hat einen Widerstandswert von R'2. Die zwischen den beiden Anschlüssen des RC-Gliedes 57 anliegende Spannung U_{enable} kann dann dazu verwendet werden einen entsprechend angeschlossenen Wandler, z. B. einen DC/DC-Wandler, wie oben beschrieben in einer Zeitperiode T2 einzuschalten und während einer Zeitperiode T1 auszuschalten. Der Wandler kann dazu über einen entsprechenden Steuereingang verfügen an dem die Spannung U_{enable} anliegt.

Die Eingangsspannung U_{E} schaltet die Schottkydiode 53 bei Überschreiten der Schwellspannung der Schottkydiode in Vorwärtsrichtung durch, so dass sich zum einen der Kondensator 56b auflädt und zum anderen der Transistor T 54 leitfähig wird, falls die Differenz der Eingangspannung U_{E} und der um die Schwellspannung reduzierten Eingangspannung U_{E} am Steueranschluss 54b des Transistors 54 größer ist, als eine Schwellspannung des Transistors. Öffnet dann der Transistor ab einer Schwellspannung, die beispielsweise der ersten Schwellwertspannung U1 entsprechen kann, so lädt sich der Kondensator C2 57b auf und am Ausgang 58 der Steuereinrichtung 10b liegt eine entsprechende Spannung U_{enable} an. Ein Absinken der Spannung U_{E} durch das Übertragen der Energie auf den zweiten Speicherkondensator nach dem Einschalten der Wandlereinrichtung durch die Steuereinrichtung 10b führt dann ab Erreichen einer zweiten Schwellspannung, die der zweiten Schwellwertspannung U2 entsprechen kann, wieder zum Abschalten des Transistors und dadurch zum Absinken der Spannung U_{enable} bis zum Abschalten der angeschlossenen Wandlereinrichtung. Die RC-Glieder 56 und 57 können als Verzögerungsglieder, also zur zeitlichen Verzögerung des Schaltvorgangs an dem DC/DC-Wandler dienen. Das heißt, beispielsweise bei Unterschreiten einer unteren Schwellspannung der Schaltung 10b wird die Wandlereinrichtung (DC/DC-Wandler) nicht unmittelbar abgeschaltet, sondern bleibt durch die Pufferwirkung der RC-Glieder 56,57 noch einige Zeit aktiv.

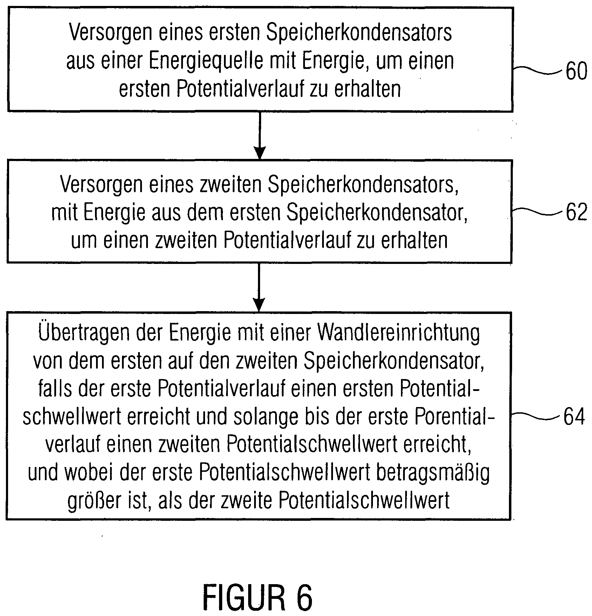

In Fig. 6 ist in einem Flussdiagramm ein Ausführungsbeispiel zum Verfahren zur Potentialwandlung gemäß der vorliegenden Erfindung dargestellt. Das Verfahren weist ein Versorgen 60 eines ersten Speicherkondensators S1, aus einer Energiequelle mit Energie auf, um einen ersten Potentialverlauf an dem ersten Speicherkondensator S1 zu erhalten. Ferner weist das Verfahren ein Versorgen 62 eines zweiten Speicherkondensators S2 mit Energie aus dem ersten Speicherkondensator S1 auf, um einen zweiten Potentialverlauf an dem zweiten Speicherkondensator S2 zu erhalten. Außerdem weist das Verfahren ein Übertragen 64 einer Energie, mit einer Wandlereinrichtung, die elektrisch zwischen dem ersten und zweiten Speicherkondensator geschaltet ist, von dem ersten Speicherkondensator S1 auf den zweiten Speicherkondensator S2 auf, falls der erste Potentialverlauf einen ersten Potentialschwellwert P1 erreicht, und bis der erste Potentialverlauf einen zweiten Potentialschwellwert P2 erreicht, und wobei der erste Potentialschwellwert P1 betragsmäßig größer ist, als der zweite Potentialschwellwert P2.

Das Übertragen 64 einer Energie mit der Wandlereinrichtung kann in einem Ausführungsbeispiel zu dem Verfahren zur Potentialwandlung ein Ausbilden eines betragsmäßig größeren maximalen Potentials P₂^{max} am Speicherkondensator S2 aufweisen, als ein maximales Potential P₁^{max} am Speicherkondensator S1, welches durch die Versorgung 60 mit Energie aus der Energiequelle aufgebaut wird. Dadurch kann eine maximal abgreifbare Ausgangsspannung U_{A}^{max} am zweiten zweiten Speicherkondensator S2 größer sein, als eine maximale am ersten Speicherkondensator S1 abgreifbare Eingangsspannung U_{E}^{max}, bezogen auf ein gemeinsames Bezugspotential.

Das Übertragen 64 einer Energie mit der Wandlereinrichtung kann gemäß einem anderen Ausführungsbeispiel beendet oder das Taktverhältnis der Energieübertragung bzw. Wandlung reduziert oder an einem Energieverbrauch angepasst werden, falls der zweite Potentialverlauf am zweiten Speicherkondensator S2 einen dritten Potentialschwellwert P3 erreicht.

Das Übertragen einer Energie vom ersten Speicherkondensator S1 auf den zweiten Speicherkondensator S2 mit einer Wandlereinrichtung kann ein Steuern der Wandlereinrichtung mit einer Steuereinrichtung aufweisen.

In Ausführungsbeispielen der vorliegenden Erfindung kann das Verfahren zur Potentialwandlung so durchgeführt werden, dass das Versorgen 60 eines ersten Speicherkondensators S1 aus einer Energiequelle mit Energie ein Aufladen des ersten Speicherkondensators S1 in einer ersten Zeitperiode T1 ist, deren Anfangszeitpunkt t₁₁ durch das Erreichen des zweiten Potentialschwellwerts P₂ und dessen Endzeitpunkt t₁₂ durch das Erreichen des ersten Potentialschwellwertes P₁ im ersten Potentialverlauf gegeben ist. Das Übertragen 64 einer Energie mit der Wandlereinrichtung kann ein Übertragen der Energie nur in einer zweiten Zeitperiode T2 sein, deren Anfangszeitpunkt t₂₁ durch das Erreichen des ersten Potentialschwellwertes P₁ und dessen Endzeitpunkt t₂₂ durch das Erreichen des zweiten Potentialschwellwertes P₂ im ersten Potentialverlauf gegeben ist. Die zweite Zeitperiode T2 kann dabei kürzer sein, als die erste Zeitperiode T1, weshalb die Wandlereinrichtung nur während der kürzeren Zeitperiode T2 aktiv elektrische Leistung aufnimmt und während der längeren ersten Zeitperiode T1 nicht.

In Ausführungsbeispielen der vorliegenden Erfindung liegt dem Verfahren zugrunde, dass in einem bestimmten Zeitraum Energie in einem Speicher S1 gesammelt wird, die dann um ein Vielfaches schneller bzw. mit einer höheren elektrischen Leistung auf die Ausgangsseite eines Schaltreglers bzw. einer Potentialwandlervorrichtung auf einen Speicher S2 übertragen wird. Gleichzeitig kann eine Aufwärtswandlung der Spannung stattfinden. Durch den Energietransfer kann die Spannung am ersten Speicher S1 sinken.

Bei Erreichen einer unteren Potentialschwelle am ersten Speicherkondensator S1 kann die Wandlereinrichtung ihren Betrieb zum Übertragen einer Energie einstellen. Während dieser Zeit kann die Wandlereinrichtung keine Leistung aufnehmen. Die gesamte Energie der Energiequelle kann zum Versorgen des ersten Speicherkondensators S1 verwendet werden. Bei Erreichen einer oberen Schwelle bzw. einen ersten Potentialschwellwertes P1 kann erneut die Energieübertragung 64 vom ersten in den zweiten Speicherkondensator beginnen. Nach der Übertragung der Energie kann eine Pause entstehen, in der die Wandlereinrichtung bzw. der Schaltregler inaktiv ist und keine Leistung aufnimmt. Dadurch kann sich sein Verbrauchsanteil an der Gesamtenergie die für die Potentialwandlung nötig ist, verringern.

Es wird darauf hingewiesen, dass abhängig von den Gegebenheiten das Verfahren zu Potentialwandlung auch als Software implementiert sein kann. Die Implementation kann auf einem digitalen Speichermedium, insbesondere einer Diskette, einer CD oder DVD mit elektronisch auslesbaren Steuersignalen erfolgen, die mit einem programmierbaren Computersystem zusammenwirken können, dass das entsprechende Verfahren ausgeführt wird. Allgemein besteht die Erfindung somit auch in einem Computerprogrammprodukt mit auf einem Maschinenauslesbaren Träger gespeicherten Programmcode zur Durchführung des Verfahrens, wenn das Computerprogrammprodukt auf einem Rechner abläuft. In anderen Worten ausgedrückt, kann die Erfindung somit als Computerprogramm mit einem Programmcode zur Durchführung des Verfahrens realisiert werden, wenn das Computerprogrammprodukt auf einem Computer abläuft.

In Ausführungsbeispielen der vorliegenden Erfindung ist das Leistungs- bzw. Powermanagement für Energiequellen mit geringer kontinuierlicher Leistungsabgabe dargestellt. Bei sehr geringer Energieausbeute einer Energiequelle kann es passieren, dass bei dem Einsatz eines Schaltreglers dieser im Betrieb annähernd die gleiche Leistung aufnimmt wie die Energiequelle abgibt. Das erfindungsgemäße Verfahren kann es ermöglichen trotz dieser Umstände einen elektrischen Verbraucher über einen Spannungsregler zu versorgen. In Ausführungsbeispielen der vorliegenden Erfindung wird die Energie, beispielsweise die Ladung einer Energiequelle zunächst in einem ersten Speicher S1, beispielsweise einem Speicherkondensator S1 zwischengespeichert. Zu diesem Zweck kann der Speicherkondensator aufgeladen werden. Ein Schaltregler bzw. eine Wandlereinrichtung kann so konzipiert sein, dass dieser ab einer definierten oberen Spannungsschwelle am Eingang beginnt die Energie aus dem ersten Speicher am Eingang S1 in einen zweiten Speicher S2 am Ausgang zu transferieren. Gemäß dem Prinzip eines Step-Up-Konverters kann der zweite Speicher S2 auf eine höhere Spannung aufgeladen werden, die beispielsweise am Konverter mittels einer Rückkoppelschleife oder -einrichtung eingestellt werden kann. Durch den Energietransfer kann die Spannung am ersten Speicher S1 sinken. Bei Erreichen einer unteren Schwelle am Eingang kann der Schaltregler seinen Betrieb einstellen. In dieser Zeit kann der Regler keine Leistung aufnehmen. Die gesamte Energie der Quelle kann in den ersten Speicher fließen. Bei Erreichen der oberen Schweller beginnt erneut die Energieübertragung vom ersten in den zweiten Speicher. Durch die Implementierung einer oberen und einer unteren Schwellspannung ergibt sich beim Schaltregler ein Hystereseverhalten. Ausführungsbeispiele zum Verfahren zur Potentialwandlung liegt die Idee zugrunde, dass in einem bestimmten Zeitraum T1 Energie in einem Speicher S1 gesammelt wird, die dann um ein Vielfaches schneller in einer kürzeren zweiten Zeitperiode bzw. mit einer höheren Leistung auf eine Ausgangsseite des Schaltreglers in einem Speicher S2 übertragen wird. Gleichzeitig kann die Aufwärtswandlung der Spannung stattfinden. Nach der Übertragung kann eine Pause entstehen, in der der Schalterregler inaktiv ist und keine oder nur geringe Leistung aufnimmt. Dadurch verringert sich sein Verbrauchsanteil an der Gesamtenergie. In dieser inaktiven Zeit kann der Speicher S1 wieder Energie von der Quelle sammeln.

In Ausführungsbeispielen kann durch das Hystereseverhalten der Ablauf zur Potentialwandlung in zwei Phasen aufgeteilt werden. Das Sammeln der Energie aus der Quelle in den ersten Speicher S1, wobei der Schaltregler in dieser Zeit inaktiv ist und diese Zeitperiode T1 einen längeren Zeitraum umfasst, als eine zweite Zeitperiode T2, in der das Übertragen der Energie in den zweiten Speicher S2 durchgeführt wird. In dieser zweiten Zeitperiode T2 ist der Schaltregler bzw. die Wandlereinrichtung aktiv und erzeugt auf der Ausgangsseite, also am Speicherkondensator S2 eine höhere abgreifbare Spannung, als auf der Eingangsseite, also am Speicherkondensator S1. Der Schaltregler bzw. die Wandlereinrichtung kann also beispielsweise ein Aufwärtswandler sein. Die Übertragung der Energie findet dabei in einer zeitlich kurzen Phase statt, verglichen mit der zeitlich langen Phase, in der die Energie von der Energiequelle in den ersten Speicher S1 übertragen bzw. dort gesammelt wird. Das hier vorgestellte Verfahren kann weniger Energie benötigen, also einen höheren Wirkungsgrad aufweisen, als übliche Verfahren zur Potentialwandlung. Die Leistungsaufnahme des betroffenen Schaltreglers - der Potentialwandlervorrichtung - kann unverändert bleiben, jedoch kann dessen Energieverbrauch deutlich sinken, da er nur kurze Zeit, während des Energietransfers, also der zweiten Zeitperiode T2, aktiv ist. Eine kontinuierliche Versorgung eines Verbrauchers ist möglich, wenn der zweite Speicher S2 geeignet dimensioniert ist und so in der Zeit ausreichend Energie liefert, in der keine Energieübertragung stattfindet.

Bei dem in Ausführungsbeispielen vorgestellten Verfahren zur Potentialwandlung kann der Schaltregler bzw. die Wandlereinrichtung durch die höhere Leistung während der kurzzeitigen Übertragung einen deutlich höheren Wirkungsgrad erzielen, als wenn die um ein Vielfaches niedrigere Leistung der Quelle kontinuierlich übertragen wird. Ein Verbraucher wird in erster Linie von einem zweiter Speicher S2 versorgt. Dabei kann natürlich nur so viel Energie entnommen werden, wie im zweiten Speicher S2 vorhanden ist.

In Ausführungsbeispielen zur vorliegenden Erfindung kann die erfindungsgemäße Potentialwandlervorrichtung und das Verfahren zum Wandeln eines Potentials auch bei einer Energiequelle mit geringer Leistungsabgabe eingesetzt werden. Die Leistungsabgabe dieser Energiequelle kann kontinuierlich erfolgen. Beispielsweise kann es sich bei der Energiequelle um einen Piezowandler oder einen Thermogenerator handeln. Die von der Energiequelle abgegebene elektrische Leistung kann beispielsweise zwischen 0.01 mW und 1 W liegen und bevorzugt z.B. zwischen 0.1 mW und 0.1 W. Die betragsmäßige Quellspannung solch einer Energiequelle mit geringer Leistungsabgabe, kann beispielsweise zwischen 1 mV und 5 V liegen und z.B. bevorzugt zwischen 10 mV und 1.5 V. Angepasst an diese Werte kann der erste Schwellspannungswert U1 beispielsweise zwischen 1 mV und 5 V liegen und bevorzugt z.B. zwischen 10 mV und 1.5 V. Der zweite Schwellspannungswert U2 kann beispielsweise zwischen 0.1 mV und 5 V liegen und bevorzugt zwischen 1 mV und 1.5 V. In einigen Ausführungsbeispielen kann das Verhältnis des zweiten Schwellspannungswertes U2 zu dem ersten Schwellspannungswert U1 kleiner oder gleich neunzehn-zwanzigstel sein, oder aber auch extremer sein. Es kann also gelten U2/U1 ≤ 19/20. Die gewandelte Ausgangsspannung U_{A} kann beispielsweise zwischen 1 V und 5 V liegen.

Gemäß einem Aspekt weist ein Verfahren zur Potentialwandlung die Schritte eines Versorgens 60 eines ersten Speicherkondensators S1 aus einer Energiequelle mit Energie in einer ersten Zeitperiode T1, deren Anfangszeitpunkt t₁₁ durch das Erreichen eines zweiten Potentialschwellwertes P2 und deren Endzeitpunkt t₁₂ durch das Erreichen eines ersten Potentialschwellwertes P₁ im ersten Potentialverlauf gegeben ist, um einen ersten Potentialverlauf an dem ersten Speicherkondensator S1 zu erhalten; eines Versorgens 62 eines zweiten Speicherkondensators S2, mit Energie aus dem ersten Speicherkondensator S1, um einen zweiten Potentialverlauf an dem zweiten Speicherkondensator S2 zu erhalten; und eines Übertragens 64 der Energie mit einer Wandlereinrichtung, die elektrisch zwischen dem ersten und zweiten Speicherkondensator geschaltet ist, von dem ersten Speicherkondensator S1 auf den zweiten Speicherkondensator S2, falls der erste Potentialverlauf einen ersten Potentialschwellwert P₁ erreicht und solange bis der erste Potentialverlauf einen zweiten Potentialschwellwert P2 erreicht, und wobei der erste Potentialschwellwert P1 betragsmäßig größer ist, als der zweite Potentialschwellwert P2, wobei das Übertragen 64 in einer zweiten Zeitperiode T2, deren Anfangszeitpunkt t₂₁ durch das Erreichen des ersten Potentialschwellwerts P1 und dessen Endzeitpunkt t₂₂ durch das Erreichen des zweiten Potentialschwellwertes P2 im ersten Potentialverlauf gegeben ist, durchgeführt wird, wobei die Wandlereinrichtung während der ersten Zeitperiode T1 deaktiviert wird und während der zweiten Zeitperiode T2 aktiviert wird, und wobei das Verhältnis der ersten Zeitperiode T1 zu der zweiten Zeitperiode T2 größer als 5 ist, auf.

Gemäß einem weiteren Aspekt ist das Übertragen 64 der Energie mit der Wandlereinrichtung in dem Verfahren zur Potentialwandlung ein Ausbilden eines betragsmäßig größeren maximalen Potentialwertes P₂^{max} am zweiten Speicherkondensator S2 als ein maximaler Potentialwert P₁^{max} am ersten Speicherkondensator S1, der auf der Versorgung mit Energie aus der Energiequelle basiert.

Gemäß einem weiteren Aspekt wird das Übertragen 64 der Energie mit der Wandlereinrichtung in dem Verfahren zur Potentialwandlung ferner durchgeführt, bis der zweite Potentialverlauf einen dritten Potentialschwellwert P3 erreicht. Gemäß einem weiteren Aspekt entspricht der erste Potentialschwellwert P₁ in dem Verfahren zur Potentialwandlung einem ersten Schwellspannungswert U1 von 1.0 V und entspricht der zweite Potentialschwellwert P2 einem zweiten Schwellspannungswert U2 von 0.3 V.

Gemäß einem weiteren Aspekt ist das Übertragen 64 der Energie in dem Verfahren zur Potentialwandlung ein Übertragen einer Ladung mit einer Wandlereinrichtung, die als Ladungspumpe, als linearer Spannungsregler, als Schaltregler, als Schaltnetzteil oder als DC/DC-Wandler ausgebildet ist.

Gemäß einem weiteren Aspekt gibt die Energiequelle in dem Verfahren zur Potentialwandlung eine Leistung zwischen 0.01 mW und 1 W ab. Gemäß einem weiteren Aspekt wird der erste Speicherkondensator in dem Verfahren zur Potentialwandlung aus einem Piezo-Wandler oder einem Thermogenerator mit Energie versorgt.

Gemäß einem weiteren Aspekt ist die Energiequelle in dem Verfahren zur Potentialwandlung als eine Energiequelle mit einer kontinuierlichen elektrischen Leistungsabgabe ausgebildet.

## Patentansprüche

1. Potentialwandlervorrichtung (100), mit:
einem ersten Speicherkondensator (S1), der ausgebildet ist, um aus einer Energiequelle (5) mit geringer Leistungsabgabe mit Energie versorgt zu werden, um einen ersten Potentialverlauf an dem ersten Speicherkondensator (S1) zu erhalten;
einem zweiten Speicherkondensator (S2), der ausgebildet ist, um aus dem ersten Speicherkondensator (S1) mit Energie versorgt zu werden, um einen zweiten Potentialverlauf an dem zweiten Speicherkondensator (S2) zu erhalten;
einer Wandlereinrichtung (10), die elektrisch zwischen den ersten und zweiten Speicherkondensator geschaltet ist und die ausgebildet ist, um eine Energieübertragung von dem ersten Speicherkondensator (S1) auf den zweiten Speicherkondensator (S2) vorzunehmen, falls der erste Potentialverlauf einen ersten Potentialschwellwert (P1) erreicht, solange bis der erste Potentialverlauf einen zweiten Potentialschwellwert (P2) erreicht, und wobei der erste Potentialschwellwert (P1) betragsmäßig größer ist, als der zweite Potentialschwellwert (P2); und
einer Steuereinrichtung (10b) aufweist, die ausgebildet ist, um die Energieübertragung der Wandlereinrichtung (10) von dem ersten Speicherkondensator (S1) auf den zweiten Speicherkondensator (S2) durch Aktivieren und Deaktivieren der Wandlereinrichtung (10) zeitlich so zu steuern, dass der erste Speicherkondensator (S1) in einer ersten Zeitperiode (T1), während der die Wandlereinrichtung deaktiviert ist und selbst keine Leistung verbraucht und deren Anfangszeitpunkt (t₁₁) durch das Erreichen des zweiten Potentialschwellwertes (P2) und dessen Endzeitpunkt (t₁₂) durch das Erreichen des ersten Potentialschwellwertes (P1) im ersten Potentialverlauf gegeben ist, aufgeladen wird, und bei dem die Wandlereinrichtung ausgebildet ist, um die Energieübertragung nur in einer zweiten Zeitperiode (T2), während der die Wandlereinrichtung aktiviert ist und deren Anfangszeitpunkt (t₂₁) durch das Erreichen des ersten Potentialschwellwertes (P1) und dessen Endzeitpunkt (t₂₂) durch das Erreichen des zweiten Potentialschwellwertes (P2) im ersten Potentialverlauf gegeben ist, durchzuführen, wobei das Verhältnis der ersten Zeitperiode (T1) zu der zweiten Zeitperiode (T2) größer als 5 ist.

2. Potentialwandlervorrichtung (100) gemäß Anspruch 1, bei der die Wandlereinrichtung (10) so ausgebildet ist, dass bei der Energieübertragung vom ersten Speicherkondensator (S1) auf den zweiten Speicherkondensator (S2) der zweite Potentialverlauf am zweiten Speicherkondensator (S2) einen maximalen Potentialwert (P₂^{max}) erreicht, der betragsmäßig größer ist, als ein maximaler Potentialwert (P₁^{max}) des ersten Potentialverlaufes am ersten Speicherkondensator (S1), der auf der Versorgung mit Energie aus der Energiequelle basiert.

3. Potentialwandlervorrichtung gemäß einem der Ansprüche 1 bis 2, bei dem die Wandlereinrichtung (10) ausgebildet ist, um eine Energieübertragung von dem ersten Speicherkondensator (S1) auf den zweiten Speicherkondensator (S2) durchzuführen bis der zweite Potentialverlauf einen dritten Potentialschwellwert (P3) erreicht.

4. Potentialwandlervorrichtung gemäß Anspruch 3, wobei der dritte Potentialschwellwert (P3), bezogen auf ein Bezugspotential einer Ausgangsspannung (U_{A}) entspricht, die am zweiten Speicherkondensator (S2) einen Verbraucher zur Verfügung steht.

5. Potentialwandlervorrichtung (100) gemäß einem der Ansprüche 1 bis 4, wobei der erste Potentialschwellwert (P1) einem ersten Schwellspannungswert (U1) von 1.0 V entspricht und der zweite Potentialschwellwert (P2) einem zweiten Schwellspannungswert (U2) von 0.3 V entspricht.

6. Potentialwandlervorrichtung gemäß einem der Ansprüche 1 bis 5, bei der das Verhältnis der ersten Zeitperiode (T1) zu der zweiten Zeitperiode (T2) zwischen 10 und 500, zwischen 100 und 400, größer als 5 oder größer als 10 ist.

7. Potentialwandlervorrichtung (100) gemäß einem der Ansprüche 1 bis 6, bei der die Wandlereinrichtung (10) als Aufwärtswandler ausgebildet ist, wobei eine Induktivität (L) über einen ersten Anschlusspunkt mit dem ersten Speicherkondensator (S1) verbunden ist und wobei der zweite Anschlusspunkt der Induktivität (L) parallel, zum einen, an einem Schalter (S) der mit dem Bezugspotential verbunden ist und zum anderen mit einer Diode (D), die in Durchlassrichtung geschaltet ist und die an den zweiten Speicherkondensator (S2) angeschlossen ist, verbunden ist.

8. Potentialwandlervorrichtung (100) gemäß einem der Ansprüche 1 bis 7, die ferner eine Steuereinrichtung (10b) aufweist, die ausgebildet ist, um bei der Energieübertragung vom ersten Speicherkondensator (S1) auf den zweiten Speicherkondensator (S2) einen zweiten Potentialverlauf am zweiten Speicherkondensator (S2) mit einem maximalen Potentialwert (P₂^{max}) auszubilden, der betragsmäßig größer ist, als ein maximaler Potentialwert (P₁^{max}) des ersten Potentialverlaufes am ersten Speicherkondensator (S1), der auf der Versorgung mit Energie aus der Energiequelle basiert.

9. Potentialwandlervorrichtung (100) gemäß Anspruch 8, wobei die Wandlereinrichtung (10) einen Schalter (S) aufweist, der durch die Steuereinrichtung (10b) bei Erreichen des ersten Potentialschwellwertes (P1) eingeschaltet wird und bei Erreichen des zweiten Potentialschwellwertes (P2) von der Steuereinrichtung ausgeschaltet wird.

10. Potentialwandlervorrichtung (100) gemäß einem der Ansprüche 1 bis 9, bei der die Wandlereinrichtung als Ladungspumpe, als linearer Spannungsregler, als Schaltregler, als Schaltnetzteil oder als DC/DC-Wandler ausgebildet ist.

11. Potentialwandlervorrichtung (100) gemäß einem der Ansprüche 1 bis 10, die so ausgebildet ist, dass ein Verbraucher kontinuierlich mit Energie versorgbar ist, wenn in der ersten Zeitperiode (T1) keine Energieübertragung durch die Wandlereinrichtung (10) von dem ersten Speicherkondensator (S1) auf den zweiten Speicherkondensator (S2) stattfindet.

12. Potentialwandlervorrichtung (100) gemäß einem der vorhergehenden Ansprüche, wobei die Energiequelle ausgebildet ist, um eine elektrische Leistung zwischen 0.01 mW und 1 W bereitzustellen.

13. Potentialwandlervorrichtung (100) gemäß einem der vorhergehenden Ansprüche, wobei die Energiequelle einen Piezowandler oder einen Thermogenerator aufweist.

14. Potentialwandlervorrichtung (100) gemäß einem der vorhergehenden Ansprüche, wobei die Energiequelle als eine Energiequelle mit einer kontinuierlichen elektrischen Leistungsabgabe ausgebildet ist.

15. Verfahren zur Potentialwandlung, mit:
Versorgen (60) eines ersten Speicherkondensators (S1) aus einer Energiequelle mit geringer Leistungsabgabe mit Energie in einer ersten Zeitperiode (T1), deren Anfangszeitpunkt (t₁₁) durch das Erreichen eines zweiten Potentialschwellwertes (P2) und deren Endzeitpunkt (t₁₂) durch das Erreichen eines ersten Potentialschwellwertes (P1) im ersten Potentialverlauf gegeben ist, um einen ersten Potentialverlauf an dem ersten Speicherkondensator (S1) zu erhalten;
Versorgen (62) eines zweiten Speicherkondensators (S2), mit Energie aus dem ersten Speicherkondensator (S1), um einen zweiten Potentialverlauf an dem zweiten Speicherkondensator (S2) zu erhalten; und
Übertragen (64) der Energie mit einer Wandlereinrichtung, die elektrisch zwischen dem ersten und zweiten Speicherkondensator geschaltet ist, von dem ersten Speicherkondensator (S1) auf den zweiten Speicherkondensator (S2), falls der erste Potentialverlauf einen ersten Potentialschwellwert (P1) erreicht und solange bis der erste Potentialverlauf einen zweiten Potentialschwellwert (P2) erreicht, und wobei der erste Potentialschwellwert (P1) betragsmäßig größer ist, als der zweite Potentialschwellwert (P2), wobei das Übertragen (64) in einer zweiten Zeitperiode (T2), deren Anfangszeitpunkt (t₂₁) durch das Erreichen des ersten Potentialschwellwerts (P1) und dessen Endzeitpunkt (t₂₂) durch das Erreichen des zweiten Potentialschwellwertes (P2) im ersten Potentialverlauf gegeben ist, durchgeführt wird,
wobei die Wandlereinrichtung während der ersten Zeitperiode (T1) deaktiviert wird und selbst keine Leistung verbraucht, und während der zweiten Zeitperiode (T2) aktiviert wird, und wobei das Verhältnis der ersten Zeitperiode (T1) zu der zweiten Zeitperiode (T2) größer als 5 ist.

## Claims

1. A potential converter device (100), comprising:
a first storage capacitor (S1) implemented to be supplied with energy from an energy source (5) having low power output to acquire a first potential form at the first storage capacitor (S1);
a second storage capacitor (S2) implemented to be supplied with energy from the first storage capacitor (S1) to acquire a second potential form at the second storage capacitor (S2);
a converter means (10) electrically connected between the first and the second storage capacitors and implemented to execute an energy transmission from the first storage capacitor (S1) to the second storage capacitor (S2) if the first potential form reaches a first potential threshold value (P1) until the first potential form reaches a second potential threshold value (P2), and wherein the first potential threshold value (P1) is greater regarding its magnitude than the second potential threshold value (P2); and
a control means (10b) which is implemented to time-control the energy transmission of the converter means (10) from the first storage capacitor (S1) to the second storage capacitor (S2) by activating and deactivating the converter means (10), so that the first storage capacitor (S1) is charged in a first time period (T1) during which the converter means is deactivated and does not consume any power itself and whose starting time (t₁₁) is given by reaching the second potential threshold value (P2) and whose end time (t₁₂) is given by reaching the first potential threshold value (P₁), in the first potential form, and wherein the converter means is implemented to execute the energy transmission only in a second time period (T2) during which the converter means is activated and whose starting time (t₂₁) is given by reaching the first potential threshold value (P1) and whose end time (t₂₂) is given by reaching the second potential threshold value (P2), in the first potential form, wherein the ratio of the first time period (T1) to the second time period (T2) is greater than 5.

2. The potential converter device (100) according to claim 1, wherein the converter means (10) is implemented so that in the energy transmission from the first storage capacitor (S1) to the second storage capacitor (S2) the second potential form at the second storage capacitor (S2) reaches a maximum potential value (P₂^{max}), which is greater regarding its magnitude than a maximum potential value (P₁^{max}) of the first potential form at the first storage capacitor (S1), which is based on the supply with energy from the energy source.

3. The potential converter device according to one of claims 1 to 2, wherein the converter means (10) is implemented to execute an energy transmission from the first storage capacitor (S1) to the second storage capacitor (S2) until the second potential form reaches a third potential threshold value (P3).

4. The potential converter device according to claim 3, wherein the third potential threshold value (P3), with regard to a reference potential, corresponds to an output voltage (U_{A}) available to a load at the second storage capacitor (S2).

5. The potential converter device (100) according to one of claims 1 to 4, wherein the first potential threshold value (P1) corresponds to a first threshold voltage value (U1) of 1.0 V and the second potential threshold value (P2) corresponds to a second threshold voltage value (U2) of 0.3 V.

6. The potential converter device according to one of claims 1 to 5, wherein the ratio of the first time period (T1) to the second time period (T2) is between 10 and 500, between 100 and 400, greater than 5 or greater than 10.

7. The potential converter device (100) according to one of claims 1 to 6, wherein the converter means (10) is implemented as an up-converter, wherein an inductivity (L) is connected to the first storage capacitor (S1) via a first terminal point and wherein the second terminal point of the inductivity (L) is connected in parallel on the one hand to a switch (S) connected to the reference potential and on the other hand to a diode (D) switched in forward direction and connected to the second storage capacitor (S2).

8. The potential converter device (100) according to one of claims 1 to 7, further comprising a control means (10b) which is implemented, in the energy transmission from the first storage capacitor (S1) to the second storage capacitor (S2), to form a second potential form at the second storage capacitor (S2) with a maximum potential value (P₂^{max}) which is greater regarding its magnitude than a maximum potential value (P₁^{max}) of the first potential form at the first storage capacitor (S1), which is based on the supply with energy from the energy source.

9. The potential converter device (100) according to claim 8, wherein the converter means (10) comprises a switch (S) switched on by the control means (10b) when reaching the first potential threshold value (P1) and switched off by the control means when reaching the second potential threshold value (P2).

10. The potential converter device (100) according to one of claims 1 to 9, wherein the converter means is implemented as a charge pump, a linear voltage regulator, a switching regulator, a switching power supply or a DC/DC converter.

11. The potential converter device (100) according to one of claims 1 to 10, which is implemented so that a load may continuously be supplied with energy when, in the first time period (T1), no energy transmission from the first storage capacitor (S1) to the second storage capacitor (S2) is executed by the converter means (10).

12. The potential converter device (100) according to any of the preceding claims, wherein the energy source is implemented to provide an electric power between 0.01 mW and 1 W.

13. The potential converter device (100) according to any of the preceding claims, wherein the energy source comprises a piezoconverter or a thermogenerator.

14. The potential converter device (100) according to any of the preceding claims, wherein the energy source is implemented as an energy source continuously outputting electric power.

15. A method of potential conversion, comprising:
supplying (60) energy from an energy source having low power output to a first storage capacitor (S1) in a first time period (T1), whose starting time (t₁₁) is given by reaching a second potential threshold value (P2) and whose end time (t₁₂) is given by reaching a first potential threshold value (P1), in the first potential form, to acquire a first potential form at the first storage capacitor (S1);
supplying (62) energy from the first storage capacitor (S1) to a second storage capacitor (S2) to acquire a second potential form at the second storage capacitor (S2); and
transmitting (64) the energy with a converter means electrically connected between the first and the second storage capacitor, from the first storage capacitor (S1) to the second storage capacitor (S2), if the first potential form reaches a first potential threshold value (P1) and until the first potential form reaches a second potential threshold value (P2), and wherein the first potential threshold value (P1) is greater regarding its magnitude than the second potential threshold value (P2), wherein the transmission (64) is executed in a second time period (T2) whose starting time (t₂₁) is given by reaching the first potential threshold value (P1) and whose end time (t₂₂) is given by reaching the second potential threshold value (P2), in the first potential form, wherein the converter means is deactivated during the first time period (T1) and does not consume any power itself, and is activated during the second time period (T2), and wherein the ratio of the first time period (T1) to the second time period (T2) is greater than 5.

## Revendications

1. Dispositif de conversion de potentiel (100), avec:
un premier condensateur accumulateur (S1) qui est conçu pour être alimenté en énergie à partir d'une source d'énergie à faible puissance de sortie (5) pour obtenir une première évolution de potentiel au premier condensateur accumulateur (S1);
un deuxième condensateur accumulateur (S2) qui est conçu pour être alimenté en énergie à partir du premier condensateur accumulateur (S1) pour obtenir une deuxième évolution de potentiel au deuxième condensateur accumulateur (S2);
un moyen de conversion (10) qui est connecté électriquement entre le premier et le deuxième condensateur accumulateur et qui est conçu pour procéder à une transmission d'énergie du premier condensateur accumulateur (S1) au deuxième condensateur accumulateur (S2) au cas où la première évolution de potentiel atteint une première valeur de seuil de potentiel (P1), jusqu'à ce que la première évolution de potentiel atteigne une deuxième valeur de seuil de potentiel (P2), et où la première valeur de seuil de potentiel (P1) est supérieure en termes de quantité à la deuxième valeur de seuil de potentiel (P2); et
présentant un moyen de commande (10b) qui est conçu pour commander temporellement la transmission d'énergie du moyen de conversion (10) du premier condensateur accumulateur (S1) au deuxième condensateur accumulateur (S2) en activant et en désactivant le moyen de conversion (10) de sorte que le premier condensateur accumulateur (S1) soit chargé pendant un premier laps de temps (T1) pendant lequel le moyen de conversion est désactivé et ne consomme aucune énergie et dont le moment de début (t₁₁) est donné par le fait d'atteindre la deuxième valeur de seuil de potentiel (P2) et son moment de fin (t₁₂) est donné par le fait d'atteindre la première valeur de seuil de potentiel (P1) dans la première évolution de potentiel, et où le moyen de conversion est conçu pour n'effectuer la transmission d'énergie que pendant un deuxième laps de temps (T2) pendant lequel le moyen de conversion est activé et son moment de début (t₂₁) est donné par le fait d'atteindre la première valeur de seuil de potentiel (P1) et son moment de fin (t₂₂) est donné par le fait d'atteindre la deuxième valeur de seuil de potentiel (P2) dans la première évolution de potentiel, où le rapport entre le premier laps de temps (T1) et le deuxième laps de temps (T2) est supérieur à 5.

2. Dispositif de conversion de potentiel (100) selon la revendication 1, dans lequel le moyen de conversion (10) est conçu de sorte que, lors de la transmission d'énergie du premier condensateur accumulateur (S1) au deuxième condensateur accumulateur (S2), la deuxième évolution de potentiel au deuxième condensateur accumulateur (S2) atteigne une valeur de potentiel maximale (P₂^{max}) qui est supérieure en termes de quantité à une valeur de potentiel maximale (P₁^{max}) de la première évolution de potentiel au premier condensateur accumulateur (S1) qui est basée sur l'alimentation en énergie à partir de la source d'énergie.

3. Dispositif de conversion de potentiel selon l'une des revendications 1 à 2, dans lequel le moyen de conversion (10) est conçu pour effectuer une transmission d'énergie du premier condensateur accumulateur (S1) au deuxième condensateur accumulateur (S2) jusqu'à ce que la deuxième évolution de potentiel atteigne une troisième valeur de seuil de potentiel (P3).

4. Dispositif de conversion de potentiel selon la revendication 3, dans lequel la troisième valeur de seuil de potentiel (P3), par rapport à un potentiel de référence, correspond à une tension de sortie (U_{A}) qui est disponible pour un consommateur au deuxième condensateur accumulateur (S2).

5. Dispositif de conversion de potentiel (100) selon l'une des revendications 1 à 4, dans lequel la première valeur de seuil de potentiel (P1) correspond à une première valeur de tension de seuil (U1) de 1,0 V et la deuxième valeur de seuil de potentiel (P2) correspond à une deuxième valeur de tension de seuil (U2) de 0,3 V.

6. Dispositif de conversion de potentiel selon l'une des revendications 1 à 5, dans lequel le rapport entre le premier laps de temps (T1) et le deuxième laps de temps (T2) est compris entre 10 et 500, entre 100 et 400, est supérieur à 5 ou supérieur à 10.

7. Dispositif de conversion de potentiel (100) selon l'une des revendications 1 à 6, dans lequel le moyen de conversion (10) est conçu comme convertisseur vers le haut, dans lequel une inductance (L) est connectée au premier condensateur accumulateur (S1) par l'intermédiaire d'un premier point de connexion et dans lequel le deuxième point de connexion de l'inductance (L) est connecté en parallèle, d'une part, à un commutateur (S) qui est connecté au potentiel de référence et, d'autre part, à une diode (D) qui est connectée dans la direction de passage et qui est connectée au deuxième condensateur accumulateur (S2).

8. Dispositif de conversion de potentiel (100) selon l'une des revendications 1 à 7, comprenant par ailleurs un moyen de commande (10b) qui est conçu pour constituer, lors de la transmission d'énergie du premier condensateur accumulateur (S1) au deuxième condensateur accumulateur (S2) une deuxième évolution de potentiel au deuxième condensateur accumulateur (S2) avec une valeur de potentiel maximale (P₂^{max}) qui est supérieure en termes de quantité à une valeur de potentiel maximale (P₁^{max}) de la première évolution de potentiel au premier condensateur accumulateur (S1) qui est basée sur l'alimentation en énergie à partir de la source d'énergie.

9. Dispositif de conversion de potentiel (100) selon la revendication 8, dans lequel le moyen de conversion (10) présente un commutateur (S) qui est activé par le moyen de commande (10b) lorsque la première valeur de seuil de potentiel (P1) est atteinte et est désactivé par le dispositif de commande lorsque la deuxième valeur de seuil de potentiel (P2) est atteinte.

10. Dispositif de conversion de potentiel (100) selon l'une des revendications 1 à 9, dans lequel le moyen de conversion est conçu sous forme de pompe de chargement, de régulateur de tension linéaire, de régulateur de commutation, d'élément d'alimentation à découpage ou de convertisseur continu/continu.

11. Dispositif de conversion de potentiel (100) selon l'une des revendications 1 à 10, conçu de sorte qu'un consommateur puisse être alimenté en énergie en continu lorsque, dans le premier laps de temps (T1), n'a lieu aucune transmission d'énergie par le moyen de conversion (10) du premier condensateur accumulateur (S1)) au deuxième condensateur accumulateur (S2).

12. Dispositif de conversion de potentiel (100) selon l'une des revendications précédentes, dans lequel la source d'énergie est conçue pour mettre à disposition une puissance électrique comprise entre 0,01 mW et 1 W.

13. Dispositif de conversion de potentiel (100) selon l'une des revendications précédentes, dans lequel la source d'énergie présente un convertisseur piézoélectrique ou un générateur thermoélectrique.

14. Dispositif de conversion de potentiel (100) selon l'une des revendications précédentes, dans lequel la source d'énergie est conçue comme source d'énergie à puissance de sortie électrique continue.

15. Procédé de conversion de potentiel, avec le fait de:
alimenter (60) un premier condensateur accumulateur (S1) en énergie à partir d'une source d'énergie à faible puissance dans un premier laps de temps (T1) dont le moment de début (tu) est donné par le fait d'atteindre une deuxième valeur de seuil de potentiel (P2) et dont le moment de fin (t₁₂) est donné par le fait d'atteindre une première valeur de seuil de potentiel (P1) dans la première évolution de potentiel, pour obtenir une première évolution de potentiel au premier condensateur accumulateur (S1);
alimenter (62) un deuxième condensateur accumulateur (S2) en énergie à partir du premier condensateur accumulateur (S1) pour obtenir une deuxième évolution de potentiel au deuxième condensateur accumulateur (S2); et
transmettre (64) l'énergie par un moyen de conversion, qui est connecté électriquement entre le premier et le deuxième condensateur accumulateur, du premier condensateur accumulateur (S1) au deuxième condensateur accumulateur (S2) au cas où la première évolution de potentiel atteint une première valeur de seuil de potentiel (P1) et jusqu'à ce que la première évolution de potentiel atteigne une deuxième valeur de seuil de potentiel (P2), et où la première valeur de seuil de potentiel (P1) est supérieure en terme de quantité à la deuxième valeur de seuil de potentiel (P2), où la transmission (64) est réalisée dans un deuxième laps de temps (T2) dont le moment de début (t₂₁) est donné par le fait d'atteindre la première valeur de seuil de potentiel (P1) et dont le moment de fin (t₂₂) est donné par le fait d'atteindre la deuxième valeur de seuil de potentiel (P2) dans la première évolution de potentiel,
dans lequel le moyen de conversion est désactivé pendant le premier laps de temps (T1) et ne consomme pas d'énergie lui-même et est activé pendant le deuxième laps de temps (T2), et où le rapport entre le premier laps de temps (T1) et le deuxième laps de temps (T2) est supérieur à 5.
